# EUROPEAN PATENT SPECIFICATION

(11) **EP 2 826 976 B1**
(45) Date of publication and mention of the grant of the patent: **23.11.2016**
(21) Application number: 14174707.1
(22) Date of filing: 27.06.2014
(51) Int. Cl.: F01P 7/16

(54) **Saddle-type vehicle**
Motorrad
Véhicule à selle

(30) Priority: 28.06.2013 JP 2013136410; 22.04.2014 JP 2014088206
(43) Date of publication of application: 21.01.2015
(73) Proprietor: Yamaha Hatsudoki Kabushiki Kaisha, Iwata-shi, Shizuoka 438-8501 (JP)
(72) Inventor: Matsushita, Yasushi, Iwata-shi, Shizuoka 438-8501 (JP)
(74) Representative: Grünecker Patent- und Rechtsanwälte PartG mbB

(56) References cited:
- EP-A1- 1 905 975
- EP-A1- 2 573 353
- JP-A- 2002 047 934
- JP-A- 2009 235 926
- US-A1- 2002 096 131

## Description

The present invention relates to a saddle-type vehicle according to the preamble of independent claim 1. Such a saddle-type vehicle can be taken from the prior art document EP 1 905 975 A1.

Conventionally, a saddle-type vehicle including a pump that supplies cooling water, an internal combustion engine to be cooled by the cooling water, a radiator that cools the cooling water, a main cooling path extending from the pump to the internal combustion engine, then to the radiator and back to the pump, a bypass path extending from the pump to the internal combustion engine and back to the pump, and a thermostat that switches the path for the cooling water to the main cooling path or to the bypass path is known.

Japanese Laid-Open Patent Publication No. 2008-95679 describes a motorcycle including a pump connected to a cylinder head of an internal combustion engine, a radiator located to the right of a crankcase of the internal combustion engine, and a thermostat located to the right of a cylinder block of the internal combustion engine. This motorcycle includes a supply pipe that connects an injection port of the pump and an inlet of a water jacket of the internal combustion engine to each other, an inlet pipe that connects an outlet of the water jacket of the internal combustion engine and an inlet of the radiator to each other, and an outlet pipe that connects an outlet of the radiator and a suction port of the pump. The outlet pipe includes an upstream conduit and a downstream conduit. The thermostat is located between the upstream conduit and the downstream conduit. The motorcycle further includes a bypass pipe that connects a middle portion of the inlet pipe to the thermostat to each other. In the motorcycle, a main cooling path is formed of the pump, the supply pipe, the water jacket, the inlet pipe, the radiator, the upstream conduit of the outlet pipe, the thermostat, and the downstream pipe of the outlet pipe. A bypass path is formed of the pump, the supply pipe, the water jacket, a portion of the inlet pipe, the bypass pipe, the thermostat and the downstream conduit of the outlet pipe. The motorcycle further includes a temperature sensor that detects a temperature of cooling water in the water jacket. The temperature sensor is located in the vicinity of the outlet of the water jacket.

In the above-described motorcycle, during a time period when the temperature of the internal combustion engine is low, for example, at the start of the motorcycle (hereinafter, referred to as a "cool period"), the cooling water flows in the bypass path. As a result, in the cooling period, the cooling water does not radiate heat in the radiator, and therefore the temperature of the internal combustion engine is raised within a short time. After the temperature of the internal combustion engine is raised (hereinafter, during a time period when the temperature of the internal combustion engine is high will be referred to as a "warm period"), the thermostat is switched to permit the cooling water to flow in the main cooling path. The cooling water flows in, and is cooled by, the radiator. Therefore, in the warm period, the cooling water having a low temperature, which has been cooled by the radiator, is supplied to the internal combustion engine, and therefore the internal combustion engine is cooled.

The motorcycle described above include the main cooling path and the bypass path. Therefore, the internal combustion engine can be quickly warmed in the cool period and can be sufficiently cooled in the warm period. However, the motorcycle has a structure in which the thermostat switches the path for the cooling water to the main cooling path or to the bypass path. This structure requires provision, as water pipes in which the cooling water is to flow, the supply pipe, the inlet pipe, the upstream conduit and the downstream conduit of the outlet pipe, and the bypass pipe. This increases the number of the water pipes in the motorcycle. In addition, these water pipes and the thermostat need to be located so as not to interfere with the temperature sensor, which complicates the structure of the water pipes and the thermostat. This results in enlarging spaces for the thermostat and the water pipes, and makes it difficult to reduce the size of the motorcycle. As can seen from the above, a conventional saddle-type vehicle including a main cooling path and a bypass path can quickly warm the internal combustion engine in the cool period and sufficiently cool the internal combustion engine in the warm period, but has a problem that it is difficult to reduce the size thereof.

**Prior art document** EP 1 905 975 A1 **discloses a saddle-type vehicle** according to the preamble of claim 1. In this prior art document, there is a first embodiment where a temperature sensor extends in a purely lateral direction and a second embodiment where the temperature sensor extends in a purely vertical direction with respect to a vehicle center line and the thermostat case is foreseen with only three ports.

It is an object of the present invention to provide a saddle-type vehicle that can quickly warm the internal combustion engine in the cool period and sufficiently cool the internal combustion engine in the warm period, and can be reduced in size.

Such an object is achieved by a saddle type vehicle according to claim 1. Further preferable aspects of the present invention are laid down in the dependent claims.

In the above saddle-type vehicle, when the temperature of the cooling water is lower than the reference temperature, the cooling water flows in a bypass path. Namely, the cooling water flows in the pump, the cooling water path of the internal combustion engine, and the first port of the thermostat, the second port of the thermostat, and the second water pipe in this order, and does not flow in the radiator. In the cool period, since the cooling water does not radiate heat in the radiator, the internal combustion engine can be warmed quickly. By contrast, when the temperature of the cooling water is higher than the reference temperature, the cooling water flows in a main cooling path. Namely, the cooling water flows in the pump, the cooling water path of the internal combustion engine, the first port of the thermostat, the third port of the thermostat, the first water pipe, the radiator, the third water pipe, the fourth port of the thermostat, the second port of the thermostat, and the second water pipe in this order. Since the cooling water radiates heat in the radiator, the cooling water having a low temperature is supplied to the internal combustion engine. Therefore, in the warm period, the internal combustion engine can be sufficiently cooled in the warm period.

In the above saddle-type vehicle, the first port of the thermostat is connected to the cooling water outlet of the internal combustion engine. The fourth port of the thermostat is connected to the third water pipe connected to the outlet of the radiator. In the saddle-type vehicle, a bypass path can be formed by use of a portion of the main cooling path. The saddle-type vehicle does not need a bypass pipe in which the cooling water flows only in the cool period, which can decrease the number of the water pipes. In the above saddle-type vehicle, as seen in a vehicle side view, the outer portion of the temperature sensor and at least a portion of the thermostat overlap the cylinder section of the internal combustion engine. The outer portion of the temperature sensor and at least a portion of the thermostat are located below a top edge of the cylinder section of the internal combustion engine and above a bottom edge of the cylinder section of the internal combustion engine as seen in a vehicle side view. In the above saddle-type vehicle, a left end of the outer portion of the temperature sensor is located to the left of a right end of the thermostat, and a right end of the outer portion of the temperature sensor is located to the right of a left end of the thermostat. In other words, at least a portion of the outer portion of the temperature sensor and at least a portion of the thermostat are located at the same position in a left-right direction. The center line of the outer portion of the temperature sensor extends in a direction obliquely inclining with respect to a vertical plane including the axial line of the cylinder section. Therefore, the length of an area where the outer portion of the temperature sensor is located and the length of an area where the thermostat is located can be shortened in the left-right direction. The outer portion of the temperature sensor and the thermostat are prevented from significantly protruding to the side from the cylinder section. From the above, the saddle-type vehicle can be reduced in size.

A structure in which both of the temperature sensor and the first port of the thermostat are connected to the cooling water outlet of the internal combustion engine and at least a portion of the outer portion of the temperature sensor and at least a portion of the thermostat are located at the same position in the left-right direction has the following problem: even though the saddle-type vehicle is reduced in size, the thermostat may obstruct and make difficult the work of attaching the temperature sensor to the cooling water outlet. By contrast, when the ease of attachment is prioritized, it may be difficult to reduce the size of the saddle-type vehicle. The present inventors conceived the following: in a structure in which the temperature sensor is located such that the center line of the outer portion thereof extends in a direction obliquely inclining with respect to the vertical plane and at least a portion of the temperature sensor and at least a portion of the thermostat are located at the same position in the left-right direction, the temperature sensor can be inserted obliquely into the cooling water outlet without being obstructed by the thermostat; and therefore, the saddle-type vehicle can be reduced in size without spoiling the ease of attachment. Therefore, in the above saddle-type vehicle, the temperature sensor is located such that the center line of the outer portion thereof extends from the cooling water outlet in a direction inclining with respect to the vertical plane. Therefore, the saddle-type vehicle can be reduced in size without spoiling the ease of attaching the temperature sensor.

For the above-described reasons, the saddle-type vehicle can quickly warm the internal combustion engine in the cool period and sufficiently cool the internal combustion engine in the warm period, and can be reduced in size.

According to a preferable embodiment of the present invention, as seen in a vehicle side view, the outer portion of the temperature sensor does not overlap any of the first water pipe, the second water pipe and the third water pipe.

According to the above embodiment, the first through third water pipes are unlikely to obstruct the work of attaching the temperature sensor. Therefore, the saddle-type vehicle can be reduced in size without spoiling the ease of work of attaching the temperature sensor.

According to another preferable embodiment of the present invention, as seen in a vehicle side view, the thermostat has a first end, which is one of two ends thereof in a direction in which the axial line of the cylinder section extends, and a second end, which is the other end thereof in the direction in which the axial line of the cylinder section extends. As seen in a vehicle side view, the outer portion of the temperature sensor is located between the first end and the second end of the thermostat in the direction in which the axial line of the cylinder section extends.

According to the above embodiment, at least a portion of the outer portion of the temperature sensor and at least a portion of the thermostat are located at the same position in the direction in which the axial line of the cylinder section extends as seen in a vehicle side view. Therefore, the outer portion of the temperature sensor and the thermostat can be prevented from being long in the direction in which the axial line of the cylinder section extends. Since the temperature sensor and the thermostat can be located in a compact manner, the saddle-type vehicle can be reduced in size.

According to still another preferable embodiment of the present invention, as seen in a vehicle side view, the outer portion of the temperature sensor is located in an area enclosed by the thermostat, the second water pipe, the third water pipe and an outer profile of the cylinder section.

In the warm period, the cooling water which has cooled the internal combustion engine and thus has a high temperature flows in the first water pipe, whereas the cooling water which has radiated heat in the radiator and thus has a low temperature flows in the second water pipe and the third water pipe. The temperature of the second water pipe and the third water pipe is sufficiently low for the temperature sensor. Since the temperature sensor may be located in the above-described area, the degree of freedom in locating the temperature sensor is increased. Therefore, the temperature sensor can be located in a compact manner.

According to still another preferable embodiment of the present invention, the cylinder section of the internal combustion engine includes an air intake pipe connection portion connected to an air intake pipe that supplies air to the internal combustion engine and a gas exhaust pipe connection portion connected to a gas exhaust pipe that discharges exhaust gas from the internal combustion engine. As seen in a vehicle side view, the axial line of the cylinder section is located between the air intake pipe connection portion and the gas exhaust pipe connection portion. As seen in a vehicle side view, the temperature sensor is inserted into the cooling water outlet of the internal combustion engine from a side on which the gas exhaust pipe connection portion is arranged with respect to the axial line of the cylinder section toward a side on which the air intake pipe connection portion is arranged with respect to the axial line of the cylinder section.

The temperature of a portion of the cylinder section of the internal combustion engine that is on the side of the gas exhaust pipe connection portion with respect to the axial line of the cylinder section is higher than the temperature of a portion of the cylinder section that is on the side of the air intake pipe connection portion with respect to the axial line of the cylinder section. According to the above embodiment, as described above, the center line of the outer portion of the temperature sensor extends in a direction obliquely inclining with respect to the vertical plane including the axial line of the cylinder section. Namely, the temperature sensor is obliquely inclined with respect to the cylinder section. Therefore, the temperature sensor is farther in the left-right direction from the cylinder section as being closer to the gas exhaust pipe connection portion and being farther from the air intake pipe connection portion. This can suppress the influence of the heat received by the outer portion of the temperature sensor from the cylinder section. This allows the detection portion of the temperature sensor to be located closer to the axial line of the cylinder section, which can reduce the size of the saddle-type vehicle.

According to still another preferable embodiment of the present invention, the saddle-type vehicle further includes a vehicle body frame including a left frame portion extending in a front-rear direction, and a right frame portion located to the right of the left frame portion and extending in the front-rear direction. The internal combustion engine is swingably supported by the vehicle body frame, As seen in a vehicle plan view, the cylinder section of the internal combustion engine is located between the left frame portion and the right frame portion.

In the above saddle-type vehicle in which the internal combustion engine is swingably supported by the vehicle body frame, the thermostat, the temperature sensor, and the first through third water pipes attached to the internal combustion engine swing along with the swing of the internal combustion engine. For this reason, spaces for the thermostat, the temperature sensor, and the first through third water pipes need to be set large such that these components do not contact each other or contact any other component of the saddle-type vehicle while swinging, in consideration of the swinging areas thereof. This is likely to enlarge the saddle-type vehicle. By contrast, in the above saddle-type vehicle, the thermostat, the temperature sensor, and the first through third water pipes can be located in a compact manner as described above. Therefore, according to the above embodiment, the saddle-type vehicle can be reduced in size although including the internal combustion engine swingably supported by the vehicle body frame.

According to still another preferable embodiment of the present invention, as seen in a vehicle side view, the temperature sensor is inserted in an upward direction into the cooling water outlet of the internal combustion engine.

When the cooling water is contaminated with air bubbles at the cooling water outlet of the internal combustion engine, the detection precision of the temperature sensor is decreased. In order to avoid this, it is conceivable to provide a mechanism that expels the air bubbles at the cooling water outlet. However, this requires a space for the mechanism that expels the air bubbles, which enlarges the saddle-type vehicle. By contrast, according to the above embodiment, the temperature sensor is inserted in an upward direction into the cylinder section. Therefore, the cooling water is unlikely to be contaminated with air bubbles at the cooling water outlet. Therefore, air is easily prevented from staying in the cooling water outlet even without the mechanism, and the saddle-type vehicle can be reduced in size.

According to still another preferable embodiment of the present invention, as seen in a vehicle side view, the outer portion of the temperature sensor is located below the thermostat.

According to the above embodiment, the outer portion of the temperature sensor and the thermostat can be prevented from being long in a front-rear direction. Since the temperature sensor and the thermostat can be located in a compact manner, the saddle-type vehicle can be reduced in size. This structure also allows the work of attaching the temperature sensor to be performed below the thermostat. Therefore, the work of attaching the temperature sensor can be easily done, and the saddle-type vehicle can be reduced in size without spoiling the ease of attachment.

According to still another preferable embodiment of the present invention, as seen in a vehicle side view, the outer portion of the temperature sensor overlaps the axial line of the cylinder section.

According to the above embodiment, the temperature sensor is attached to a central portion of the cylinder section. The work of attaching the temperature sensor is easier than in the case where the temperature sensor is attached to a portion of the cylinder section that is far from the axial line. Therefore, the saddle-type vehicle can be reduced in size without spoiling the ease of attaching the temperature sensor.

According to still another preferable embodiment of the present invention, the temperature senor and the thermostat are located to the right or to the left of the axial line of the cylinder section. The pump is located to the right or to the left of the axial line of the cylinder section so as to be on the opposite side to the temperature senor and the thermostat with respect to the axial line of the cylinder section.

According to the above embodiment, the pump is located either on the right side or the left side which is opposite to the side on which the temperature senor and the thermostat are located. Therefore, the pump does not obstruct the work of attaching the temperature sensor. This allows the temperature sensor to be attached sufficiently easily. Therefore, the saddle-type vehicle can be reduced in size without spoiling the ease of attaching the temperature sensor.

According to still another preferable embodiment of the present invention, the radiator is located at a position that is to the side of the crankcase and is to the right or to the left of the axial line of the cylinder section so as to be on the same side with the thermostat with respect to the axial line of the cylinder section.

According to the above embodiment, the distance between the thermostat and the radiator can be shortened, and thus the first water pipe and the third water pipe are allowed to be shorter. Therefore, the saddle-type vehicle can be reduced in size.

The present invention can provide a saddle-type vehicle that can quickly warm the internal combustion engine in the cool period and sufficiently cool the internal combustion engine in the warm period, and can be reduced in size.

FIG. 1 is a right side view of a motorcycle in an embodiment.
FIG. 2 is a cross-sectional view of a power unit taken along line II-II in FIG. 1.
FIG. 3 is a right side view of a portion of the power unit, a radiator and the like.
FIG. 4 is a left side view of a portion of the power unit, the radiator and the like.
FIG. 5 is a front view of a portion of the power unit, the radiator and the like.
FIG. 6 is a plan view of a portion of the power unit, the radiator and the like.
FIG. 7 is a cross-sectional view taken along line VII-VII in FIG. 3.
FIG. 8 is a perspective view of a portion of the power unit, a thermostat, a temperature sensor and the like.
FIG. 9 is a front view of a portion of the power unit and the radiator when a vehicle body frame is supported by a side stand.
FIG. 10 is a water circuit diagram of a cooling device, which shows the circulation of cooling water in a cool period.
FIG. 11 is a water circuit diagram of the cooling device, which shows the circulation of the cooling water in a warm period.
FIG. 12 is a right side view of a motorcycle in another embodiment.

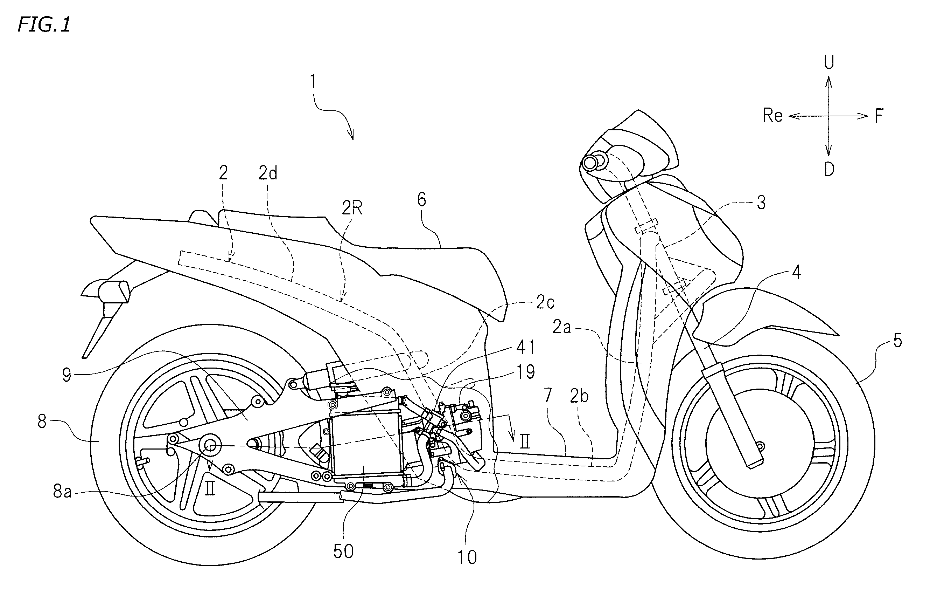

Hereinafter, an embodiment of the present invention will be described. As shown in FIG. 1, a saddle-type vehicle in this embodiment is a scooter-type motorcycle 1. However, the saddle-type vehicle is not limited to a scooter-type motorcycle. The "saddle-type vehicle" refers to any vehicle which a rider rides astride. The saddle-type vehicle may be another type of motorcycle, such as a street-type motorcycle or the like, or a vehicle other than a motorcycle, such as a motor-tricycle, an ATV or the like.

In the following description, unless otherwise specified, the terms "up", "down", "front", "rear", "left" and "right" respectively mean up, down, front, rear, left and right as seen from a rider of the motorcycle 1 sitting on a seat 6 described later. The motorcycle 1 may assume an inclining posture while running. The terms "up" and "down" respectively correspond to the vertically upward direction and the vertically downward direction when the motorcycle 1 is still on a horizontal surface. In the figures, U, D, F, Re, L and R respectively indicate up, down, front, rear, left and right.

The motorcycle 1 includes a vehicle body frame 2, a power unit 10 swingably supported by the vehicle body frame 2, the seat 6 on which a rider sits, and a low foot step 7 located forward with respect to the seat 6. A head pipe 3 is provided at a front end of the vehicle body frame 2. A front fork 4 is rotatably supported by the head pipe 3. A front wheel 5 is supported by a bottom end of the front fork 4.

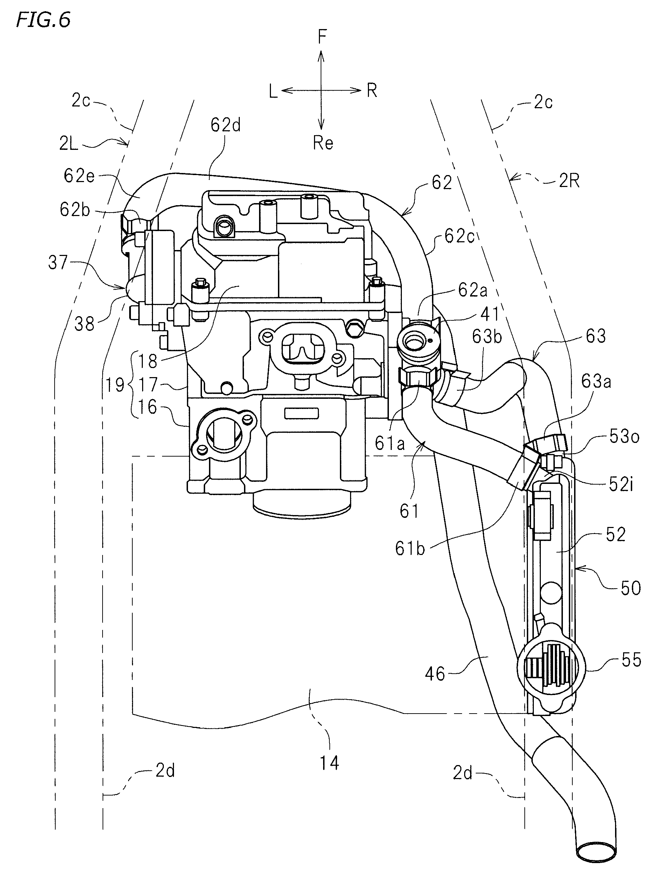

The vehicle body frame 2 includes a left frame portion 2L extending in a front-rear direction and a right frame portion 2R located to the right of the left frame portion 2L and extending in a front-rear direction (see FIG. 6). As seen in a vehicle side view, the left frame portion 2L and the right frame portion 2R each include a first frame 2a extending obliquely in a rearward and downward direction from the head pipe 3, a second frame 2b extending rearward from a bottom end of the first frame 2a, a third frame 2c extending obliquely in a rearward and upward direction from a rear end of the second frame 2b, and a fourth frame 2d extending obliquely in a rearward and upward direction from a rear end of the third frame 2c. The vehicle body frame 2 in this embodiment is merely an example. The structure of the vehicle body frame is not limited to that of the vehicle body frame 2 in this embodiment.

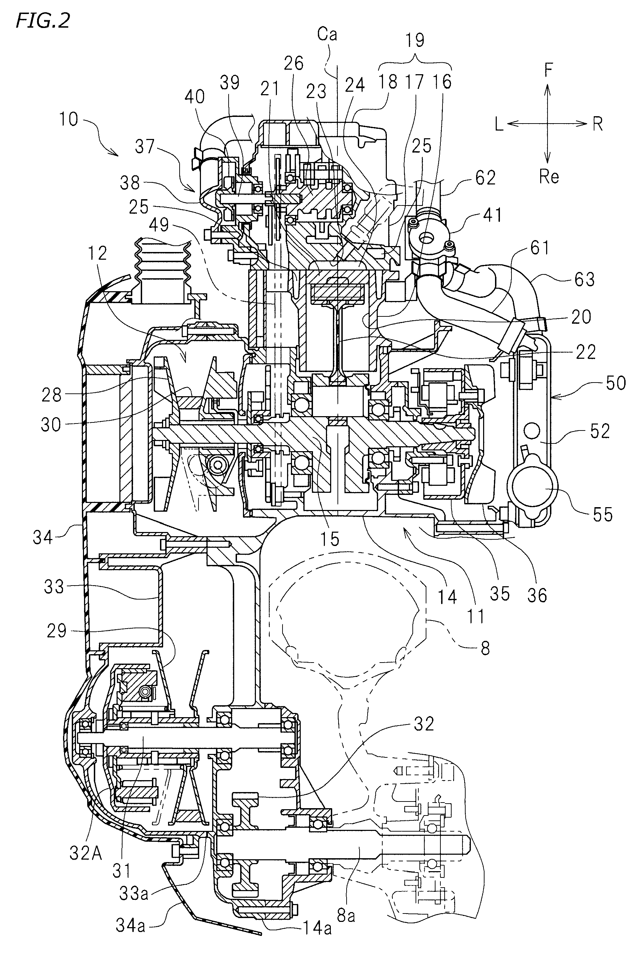

As shown in FIG. 2, the power unit 10 includes a water-cooled internal combustion engine (hereinafter, referred to as an "engine") 11 and a V-belt type continuously variable transmission (hereinafter, referred to as the "CVT") 12. As shown in FIG. 1, the power unit 10 is a so-called unit swing-type power unit, and is supported by the vehicle body frame 2 to be swingable upward and downward about a pivot shaft (not shown). The engine 11 is swingably supported by the vehicle body frame 2. A rear end of the power unit 10 supports a driving shaft 8a of a rear wheel 8 in a left portion of the motorcycle 1. A driving force of the engine 11 is transmitted to the rear wheel 8 via the CVT 12. In a right portion of the motorcycle 1, the driving shaft 8a of the rear wheel 8 is supported by a rear end of a rear arm 9. A front end of the rear arm 9 is attached to the power unit 10. To the right of the power unit 10, a radiator 50 is located. The radiator 50 is swingable upward and downward together with the power unit 10 about a pivot shaft with respect to the vehicle body frame 2.

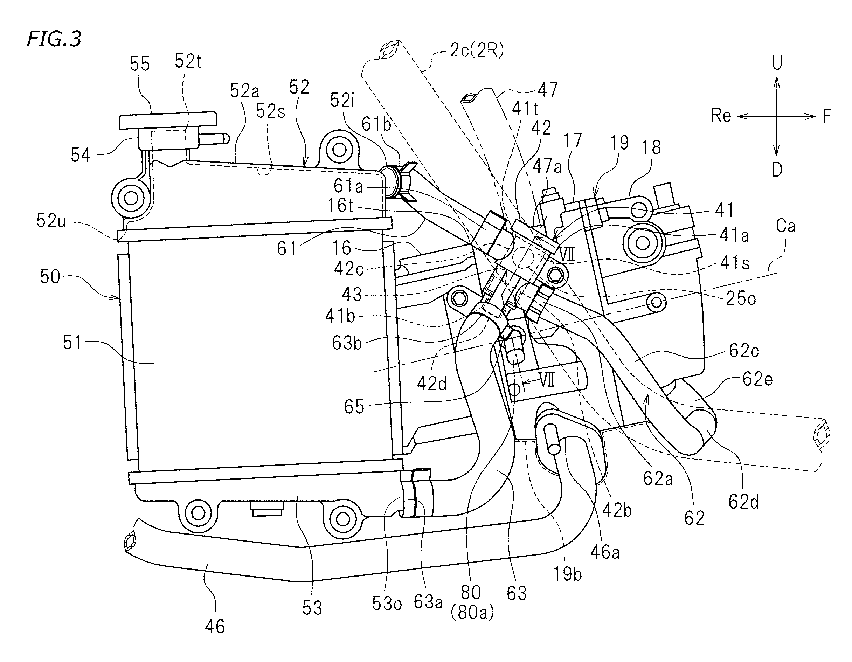

As shown in FIG. 2, the engine 11 includes a crankcase 14, a crankshaft 15 located in the crankcase 14, and a cylinder section 19. The cylinder section 19 extends forward from the crankcase 14. The cylinder section 19 of the engine 11 includes a cylinder body 16, a cylinder head 17 and a cylinder cover head 18. The cylinder section 19 of the engine 11 includes the cylinder body 16 connected to a front portion of the crankcase 14, the cylinder head 17 connected to the cylinder body 16, and the cylinder head cover 18 connected to the cylinder head 17. Herein, the expression "extending forward" refers both to extending forward horizontally and extending forward in a direction inclining with respect to a horizontal line. In this example, as shown in FIG. 3, the cylinder section 19 extends obliquely in a forward and upward direction from the crankcase 14 as seen in a vehicle side view. Ca represents an axial line of the cylinder section 19. In FIG. 3 through FIG. 5, the crankcase 14 is not shown. As shown in FIG. 6, the cylinder section 19 is located between the left frame portion 2L and the right frame portion 2R of the vehicle body frame 2 as seen in a vehicle plan view.

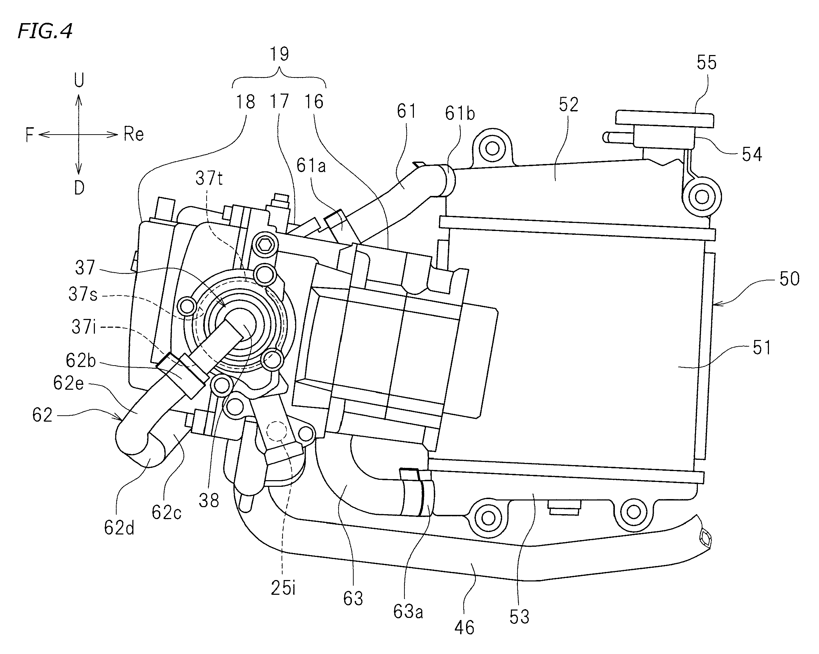

As shown in FIG. 2, a cylinder 20 is provided in the cylinder body 16. A piston 21 is located in the cylinder 20. The piston 21 and the crankshaft 15 are coupled to each other via a connecting rod 22. In the cylinder section 19, a combustion chamber 24 is provided. The combustion chamber 24 is defined by a concaved portion 23 of the cylinder head 17, an inner circumferential surface of the cylinder 20, and a top face of the piston 21. In the cylinder section 19, a cooling water path 25 in which cooling water is to flow is formed. The cooling water path 25 is formed in the cylinder body 16 and the cylinder head 17. The engine 11 has an cooling water inlet 25i (see FIG. 4) through which the cooling water flows into the cooling water path 25 and an cooling water outlet 25o (see FIG. 3) through which the cooling water flows out of the cooling water path 25. The cylinder section 19 has the cooling water inlet 25i through which the cooling water flows into the cooling water path 25 and the cooling water outlet 25o through which the cooling water flows out of the cooling water path 25. The cooling water inlet 25i is formed in a left portion of the cylinder section 19, and the cooling water outlet 25o is formed in a right portion of the cylinder section 19. In more detail, the cooling water inlet 25i is formed in a left portion of the cylinder head 17, and the cooling water outlet 25o is formed in a right portion of the cylinder head 17. In the cylinder section 19, a cam shaft 26 is located. The cam shaft 26 is located in the cylinder head 17 and the cylinder head cover 18. The cam shaft 26 is provided with a cam that drives an air intake valve and a gas exhaust valve (not shown). The cam shaft 26 is coupled to the crankshaft 15 via a cam chain 49.

In this embodiment, the CVT 12 is located to the left of the engine 11. Alternatively, the CVT 12 may be located to the right of the engine 11. The CVT 12 includes a driving pulley 28 attached to a left end of the crankshaft 15, a driven pulley 29 located rearward to the driving pulley 28, and a V-belt 30 wound on the driving pulley 28 and the driven pulley 29. The driven pulley 29 is supported by a shaft 31. Attached to the shaft 31 is a start clutch 32A that couples the driven pulley 29 and the shaft 31 to each other when the rotation speed of the driven pulley 29 becomes equal to or higher than a reference rotation speed. The shaft 31 is coupled to the driving shaft 8a via a gear 32 and an additional gear (not shown).

To the left of the crankcase 14, a transmission case 33 is located. The CVT 12 is located in the transmission case 33. To the left of the transmission case 33, a cover 34 is located. The transmission case 33 is formed of aluminum, and the cover 34 is formed of a resin. There is no specific limitation on the material of the transmission case 33 or the cover 34. The cover 34 extends to a position rearward with respect to a face 33a along which the transmission case 33 and a gear box 14a contact each other. A rear portion 34a of the cover 34 is located rearward with respect to the face 33a. The gear box 14a is covered with the rear portion 34a of the cover 34. This can decrease noise from the gear box 14a. The gear box 14a is not exposed outside, and therefore, does not need to be, for example, coated or dustproof-treated. This can reduce the cost of the power unit 10.

An electric generator 35 is attached to a right end of the crankshaft 15. Also at the right end of the crankshaft 15, a fan 36 that supplies air to the radiator 50 is fixed. The radiator 50 is located to the right of the crankcase 14, and the fan 36 is located to the left of the radiator 50. The fan 36 forms an air flow from a position to the right of the radiator 50 to a position to the left of the radiator 50.

As shown in FIG. 4, the motorcycle 1 includes a pump 37 that supplies the cooling water. The pump 37 is attached to a left portion of the cylinder section 19. As shown in FIG. 2, the pump 37 includes a pump casing 38, a pump shaft 39 fixed to the cam shaft 26 so as to rotate together with the cam shaft 26, and an impeller 40 attached to the pump shaft 39. The pump shaft 39 and the impeller 40 are located in the pump casing 38. The pump 37 is driven by the cam shaft 26. The pump 37 supplies the cooling water toward the cooling water inlet 25i (see FIG. 4).

As shown in FIG. 3, the radiator 50 includes a radiator main body 51 that causes the cooling water to radiate heat, a top tank 52 located above the radiator main body 51, and a bottom tank 53 located below the radiator main body 51. Although not shown, a water path in which the cooling water flows is formed in the radiator main body 51, and an air path in which air is to flow is formed outside the radiator main body 51. The radiator main body 51 is structured to allow the cooling water flowing in the water path and the air flowing in the air path to exchange heat with each other. The top tank 52 and the bottom tank 53 are connected to the water path. A water injection opening 54 is provided at a rear end of the top tank 52. A lid 55 is detachably attached to the water injection opening 54. A top wall 52a of the top tank 52 is inclined obliquely in a rearward and upward direction. Therefore, the water injection opening 54 is located at the highest position of the top tank 52. The radiator 50 has an inlet 52i (50i) through which the cooling water flows thereinto and an outlet 53o (50o) through which the cooling flows out thereof. In this example, the inlet 52i through which the cooling water flows into the radiator 50 is formed in the top tank 52, and the outlet 53o through which the cooling water flows out of the radiator 50 is formed in the bottom tank 53. More specifically, the inlet 52i through which the cooling water flows into the radiator 50 is formed in a front portion of the top tank 52, and the outlet 53o through which the cooling water flows out of the radiator 50 is formed in a front portion of the bottom tank 53. The structure of the radiator 50 is not limited to the above. The radiator 50 may include a front tank and a rear tank instead of the top tank 52 and the bottom tank 53.

The motorcycle 1 includes a thermostat 41. As shown in FIG. 3, the thermostat 41 overlaps the cylinder section 19 of the engine 11 as seen in a vehicle side view. In this embodiment, a major portion of the thermostat 41 overlaps the cylinder section 19 of the engine 11 as seen in a vehicle side view, but a top end of the thermostat 41 does not overlap the cylinder section 19 of the engine 11 as seen in a vehicle side view. Alternatively, the entirety of the thermostat 41 may overlap the cylinder section 19 of the engine 11 as seen in a vehicle side view. The thermostat 41 includes a thermostat case 42 and a valve 43 provided in the thermostat case 42.

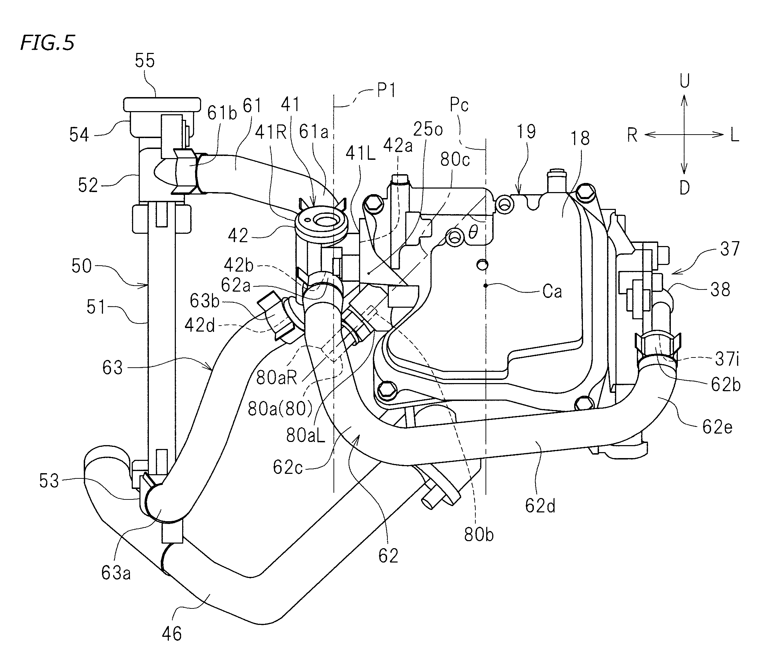

The thermostat case 42 has a first port 42a, a second port 42b, a third port 42c and a fourth port 42d. More specifically, the thermostat case 42 has the first port 42a (see FIG. 5) opening leftward, the second port 42b opening obliquely in a forward and downward direction, the third port 42c opening obliquely in a rearward and upward direction, and the fourth port 42d opening obliquely in a rightward and downward direction. The opening directions of the first port 42a, the second port 42b, the third port 42c and the fourth port 42d are directions in a state where the motorcycle 1 is still on a horizontal plane and the thermostat 41 is attached to the power unit 10. Such opening directions of the first port 42a, the second port 42b, the third port 42c and the fourth port 42d are merely an example, and there is no specific limitation on the opening directions. In this embodiment, the thermostat case 42 is formed to be generally cylindrical, and is attached to the cylinder section 19 at a posture inclining with respect to a vertical line. There is no specific limitation on the shape of the thermostat case 42. The first port 42a, the second port 42b, the third port 42c and the fourth port 42d communicate with an inner space 41s of the thermostat case 42. Hereinafter, the inner space 41s of the thermostat case 42 will be referred to as the "inner space 41s of the thermostat 41". The first port 42a, the second port 42b, the third port 42c and the fourth port 42d of the thermostat case 42 will be referred to as the "first port 42a of the thermostat 41", the "second port 42b of the thermostat 41", the "third port 42c of the thermostat 41" and the "fourth port 42d of the thermostat 41". A top end 41t of the inner space 41s of the thermostat 41 is located at a position lower than a top end 52t of an inner space 52s of the top tank 52 of the radiator 50. The top end 41t of the inner space 41s of the thermostat 41 is located at a position higher than a top end 37t (see FIG. 4) of an inner space 37s of the pump 37.

As shown in FIG. 3, the first port 42a, the second port 42b, the third port 42c and the fourth port 42d overlap the cylinder section 19 of the engine 11 as seen in a vehicle side view. The first port 42a, the second port 42b, the third port 42c and the fourth port 42d do not need to overlap the cylinder section 19 of the engine 11 as seen in a vehicle side view.

The valve 43 is structured to close the fourth port 42d and to cause the first port 42a and the second port 42b to communicate with each other when the temperature of the cooling water is lower than a reference temperature. The valve 43 is structured to cause the first port 42a and the third port 42c to communicate with each other and to cause the second port 42b and the fourth port 42d to communicate with each other when the temperature of the cooling water is higher than the reference temperature. In this embodiment, the valve 43 is structured to cause the first port 42a and the third port 42c to communicate with each other and to cause the second port 42b and the fourth port 42d to communicate with each other when the temperature of the cooling water is equal to the reference temperature. Alternatively, the valve 43 may be structured to close the fourth port 42d and to cause the first port 42a and the second port 42b to communicate with each other when the temperature of the cooling water is equal to the reference temperature. The value of the reference temperature is uniquely defined by the thermostat 41. The value of the reference temperature is not limited to any specific value. The value of the reference temperature can be selectively set by replacing the thermostat 41.

The first port 42a of the thermostat 41 is connected to the cooling water outlet 25o of the engine 11. The cooling water absorbs the heat of the engine 11 to have the temperature thereof raised while flowing in the cooling water path 25. Therefore, the temperature of the cooling water is highest at the cooling water outlet 25o. Since the first port 42a of the thermostat 41 is connected to the cooling water outlet 25o, the cooling water having the highest temperature flows into the thermostat 41. Therefore, when the temperature of the engine 11 becomes high, the thermostat 41 is switched immediately. In this manner, the engine 11 can be prevented from being overheated. In this example, the first port 42a is directly connected to the cooling water outlet 25o. Alternatively, the first port 42a may be indirectly connected to the cooling water outlet 25o. The expression "indirectly connected" refers to that the first port 42a is connected to the cooling water outlet 25o via another member such as a water pipe or the like. A water pipe may be provided between the first port 42a of the thermostat 41 and the cooling water outlet 25o.

The motorcycle 1 includes a first water pipe 61, a second water pipe 62 and a third water pipe 63 as water pipes in which the cooling water is to flow. In this specification, the "water pipe" maybe a pipe having flexibility such as a rubber hose or the like, a pipe having no flexibility such as a metal pipe or the like, or a pipe formed of both of such materials. In this embodiment, the first water pipe 61, the second water pipe 62 and the third water pipe 63 are formed of flexible hoses. Alternatively, a portion of, or the entirety of, each of the first water pipe 61, the second water pipe 62 and the third water pipe 63 may be formed of a pipe having no flexibility.

An upstream end 61 a of the first water pipe 61 is connected to the third port 42c of the thermostat 41. A downstream end 61 b of the first water pipe 61 is connected to the inlet 52i of the radiator 50. As seen in a vehicle side view, the first water pipe 61 extends obliquely in a forward and downward direction from the downstream end 61 b to the upstream end 61 a. As shown in FIG. 5, as seen in a vehicle front view, the first water pipe 61 extends obliquely in a rightward and downward direction (as seen from the rider of the motorcycle 1, obliquely in a leftward and downward direction) from the downstream end 61 b to the upstream end 61 a.

As shown in FIG. 5, an upstream end 62a of the second water pipe 62 is connected to the second port 42b of the thermostat 41. A downstream end 62b of the second water pipe 62 is connected to a suction port 37i of the pump 37. The second water pipe 62 includes a right inclining portion 62c, a transverse portion 62d, and a left inclining portion 62e. As shown in FIG. 3, the right inclining portion 62c is located to the right of the cylinder section 19, and extends obliquely in a forward and downward direction from the upstream end 62a as seen in a vehicle side view. As shown in FIG. 5, the transverse portion 62d extends from a position to the right of the cylinder section 19 to a position to the left of the cylinder section 19 below the cylinder section 19. As shown in FIG. 4, the left inclining portion 62e is located to the left of the cylinder section 19, and extends obliquely in a rearward and upward direction to the downstream end 62b as seen in a vehicle side view.

As shown in FIG. 3, an upstream end 63a of the third water pipe 63 is connected to the outlet 53o of the radiator 50. A downstream end 63b of the third water pipe 63 is connected to the fourth port 42d of the thermostat 41. As seen in a vehicle side view, the third water pipe 63 once extends forward and then is curved to extend upward from the upstream end 63a to the downstream end 63b. As shown in FIG. 5, as seen in a vehicle front view, the third water pipe 63 extends obliquely in a rightward and upward direction from the upstream end 63a to the downstream end 63b.

As shown in FIG. 3, an air intake pipe 47 through which air is supplied to the engine 11 is connected to a top portion of the cylinder head 17. In the top portion of the cylinder head 17, an air intake pipe connection portion 47a is formed, and the air intake pipe 47 is connected to the air intake pipe connection portion 47a. As seen in a vehicle side view, the air intake pipe 47 extends upward from the air intake pipe connection portion 47a. Although not shown, an air intake port that communicates the air intake pipe connection portion 47a and the combustion chamber 24 to each other is formed in the cylinder head 17. Air flows in the air intake pipe 47, the air intake pipe connection portion 47a and the air intake port to be sucked into the combustion chamber 24.

To a bottom portion of the cylinder head 17, a gas exhaust pipe 46 through which exhaust gas is discharged from the engine 11 is connected. In the bottom portion of the cylinder head 17, a gas exhaust pipe connection portion 46a is formed, and the gas exhaust pipe 46 is connected to the gas exhaust pipe connection portion 46a. Although not shown, a gas exhaust port that communicates the combustion chamber 24 and gas exhaust pipe connection portion 46a to each other is formed in the cylinder head 17. Exhaust gas flows in the gas exhaust port, the gas exhaust pipe connection portion 46a and the gas exhaust pipe 46 to be discharged outside from the combustion chamber 24. As seen in a vehicle side view, a portion of the gas exhaust pipe 46 is located below the radiator 50. As shown in FIG. 5, the gas exhaust pipe 46 extends from a position to the left of the radiator 50 to a position to the right of the radiator 50 below the radiator 50. As shown in FIG. 6, the gas exhaust pipe 46 overlaps a rear end of the radiator 50 as seen in a plan view.

As shown in FIG. 3, the air intake pipe connection portion 47a is located above the axial line Ca of the cylinder section 19, whereas the gas exhaust pipe connection portion 46a is located below the axial line Ca of the cylinder section 19. As seen in a vehicle side view, the axial line Ca of the cylinder section 19 is located between the air intake pipe connection portion 47a and the gas exhaust pipe connection portion 46a. As seen in a vehicle side view, the axial line Ca of the cylinder section 19 is located between the air intake port and the gas exhaust port, neither of which is shown. Exhaust gas having a high temperature flows through the gas exhaust port, and air having a temperature lower than that of the exhaust gas flows through the air intake port. Therefore, the temperature of a portion of the cylinder section 19 that is on the side of the gas exhaust pipe connection portion 46a with respect to the axial line Ca tends to be higher than the temperature of a portion of the cylinder section 19 that is on the side of the air intake pipe connection portion 47a with respect to the axial line Ca.

As shown in FIG. 3, the motorcycle 1 includes a temperature sensor 80 that detects a temperature of the cooling water. The temperature sensor 80 is structured to detect the temperature of the cooling water in the cooling water path 25 of the engine 11. The temperature of the cooling water detected by the temperature sensor 80 is used to, for example, control the engine 11. A portion of the cooling water path 25 that has the highest temperature is the cooling water outlet 25o In order to determine whether or not to cool the cooling water in the radiator 50, it is preferable to detect the temperature of the cooling water in the portion of the cooling water path 25 having the highest temperature. Therefore, the temperature sensor 80 is attached to the cooling water outlet 25o of the cylinder section 19. The temperature sensor 80 is located so as to protrude outward in a vehicle width direction from the cooling water outlet 25o (see FIG. 5). In this example, the temperature sensor 80 is located so as to protrude rightward from the cooling water outlet 25o. As seen in a vehicle side view, the temperature sensor 80 overlaps the cylinder section 19.

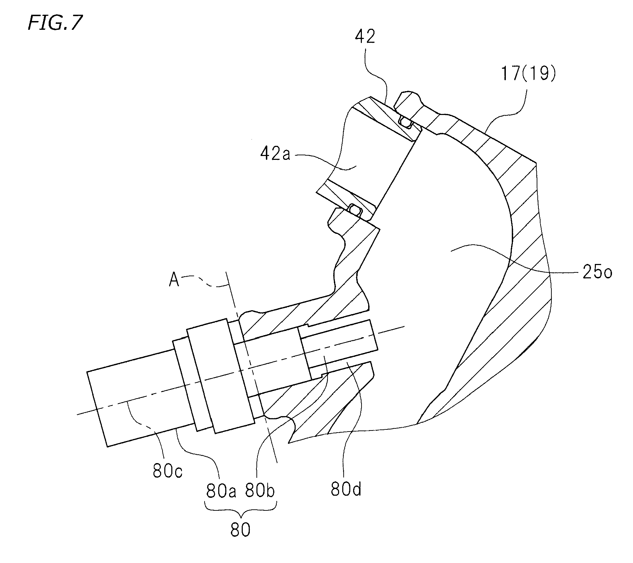

FIG. 7 is a cross-sectional view taken along line VII-VII in FIG. 3. As shown in FIG. 7, the temperature sensor 80 includes an inner portion 80b located inside the engine 11 and an outer portion 80a located outside the engine 11. Phantom line A in FIG. 7 represents the border between the inner portion 80b and the outer portion 80a. A portion to the right of the phantom line A is the inner portion 80b, whereas a portion to the left of the phantom line A is the outer portion 80a. The inner portion 80b is located in the cylinder section 19. The inner portion 80b is located in the cylinder head 17. A portion of the inner portion 80b forms a detection portion contactable with the cooling water. To the outer portion 80a, an electric cable (not shown) is connected. In this embodiment, the temperature sensor 80 is cylindrical, and reference sign 80c represents the center line of the temperature sensor 80. The center line 80c is the center line of the outer portion 80a of the temperature sensor 80 and also the center line of the inner portion 80b of the temperature sensor 80. The temperature sensor 80 is not limited to being cylindrical. In the case where the temperature sensor 80 is not cylindrical and of another shape, the center line of the outer portion 80a and the inner portion 80b of the temperature sensor 80 may be defined as follows. A cross-section of the outer portion 80a and a cross-section of the inner portion 80b are converted into equivalent circles (circles having the same circumferential length), and a line connecting the centers of the circles is the center line of the outer portion 80a and also the inner portion 80b of the temperature sensor 80.

As shown in FIG. 5, at least a portion of the outer portion 80a of the temperature sensor 80 and at least a portion of the thermostat 41 are located at the same position in a left-right direction. Namely, a left end 80aL of the outer portion 80a of the temperature sensor 80 is located to the left of a right end 41 R of the thermostat 41, and a right end 80aR of the outer portion 80a of the temperature sensor 80 is located to the right of a left end 41 L of the thermostat 41. At least a portion of the outer portion 80a of the temperature sensor 80 and at least a portion of the thermostat 41 are both located in a vertical plane P1, which is parallel to a vertical plane Pc including the axial line Ca of the cylinder section 19. The outer portion 80a of the temperature sensor 80 is located below the thermostat 41.

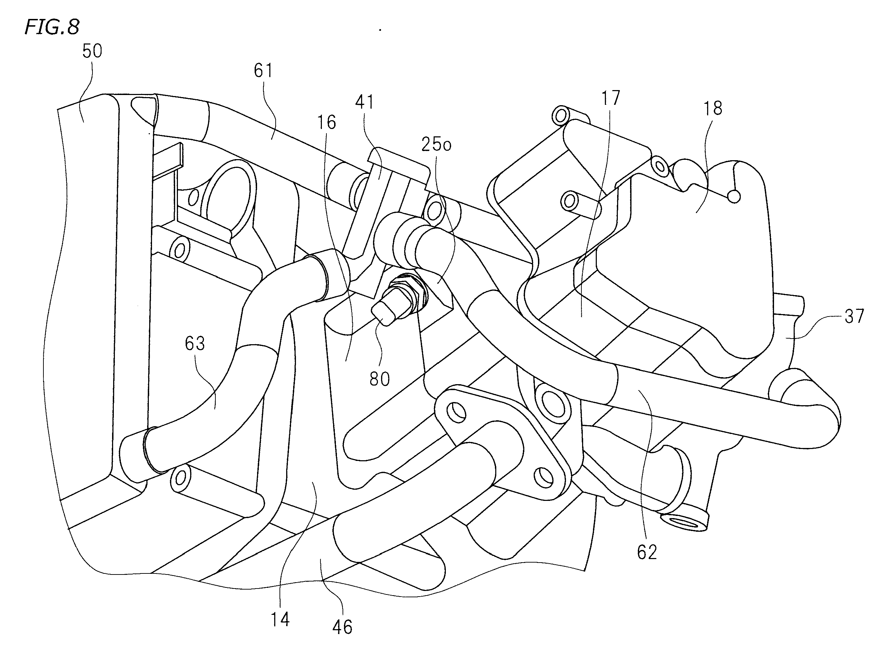

The temperature sensor 80 is located such that the center line 80c of the outer portion 80a extends from the cooling water outlet 25o of the engine 11 in a direction obliquely inclining with respect to the vertical plane Pc including the axial line Ca of the cylinder section 19. The temperature sensor 80 is obliquely inclined with respect to the vertical plane Pc including the axial line Ca of the cylinder section 19. The temperature sensor 80 is obliquely inclined such that the inner portion 80b is closer to the vertical plane Pc than the outer portion 80a is. An inclining angle θ of the temperature sensor 80 with respect to the vertical plane Pc is, for example, 45 degrees. The inclining angle θ is not limited to 45 degrees. The inclining angle θ may be, for example, in the range of 30 degrees to 60 degrees, or outside this range. The inclining angle θ may be appropriately set such that ease of work of, for example, attaching the temperature sensor 80 is guaranteed. As shown in FIG. 8, the temperature sensor 80 is inserted into the cylinder head 17 in an upward direction. The outer portion 80a of the temperature sensor 80 is located below the inner portion 80b thereof.

As shown in FIG. 3, the entirety of the temperature sensor 80 overlaps the cylinder section 19 of the engine 11 as seen in a vehicle side view. The entirety of the temperature sensor 80 overlaps the cylinder head 17 as seen in a vehicle side view. The temperature sensor 80 overlaps the axial line Ca of the cylinder section 19 as seen in a vehicle side view. In this example, as seen in a vehicle side view, the outer portion 80a of the temperature sensor 80 overlaps the axial line Ca of the cylinder section 19. Alternatively, as seen in a vehicle side view, the inner portion 80b of the temperature sensor 80 may overlap the axial line Ca of the cylinder section 19. A top end of the temperature sensor 80 may be located below the cylinder line Ca, or a bottom end of the temperature sensor 80 may be located above the cylinder line Ca.

As seen in a vehicle side view, the temperature sensor 80 does not overlap any of the first water pipe 61, the second water pipe 62 and the third water pipe 63. Reference sign 65 represents a hose band that connects the third water pipe 63 to the fourth port 42d of the thermostat 41. The hose band 65 is different from the third water pipe 63. As seen in a vehicle side view, the hose band 65 may or may not overlap the temperature sensor 80. As seen in a vehicle side view, the outer portion 80a of the temperature sensor 80 is located between the second port 42b and the fourth port 42d of the thermostat 41 in the direction in which the axial line Ca of the cylinder section 19 extends. Where one of two ends of the thermostat 41 in the direction in which the axial line Ca of the cylinder section 19 extends is a first end 41 a and the other end thereof is a second 41 b, the outer portion 80a of the temperature sensor 80 is located between the first end 41 a and the second end 41 b in the direction in which the axial line Ca of the cylinder section 19. As seen in a vehicle side view, the outer portion 80a of the temperature sensor 80 is located in an area enclosed by the thermostat 41, the second water pipe 62, the third water pipe 63 and an outer profile 19b of the cylinder section 19. In FIG. 3, a portion of the outer profile 19b of the cylinder section 19 is represented with a dashed line.

As seen in a vehicle side view, the temperature sensor 80 is located rearward with respect to the third frame 2c of the vehicle body frame 2. As seen in a vehicle side view, the temperature sensor 80 does not overlap the vehicle body frame 2. As seen in a vehicle side view, the outer portion 80a of the temperature sensor 80 does not overlap the vehicle body frame 2.

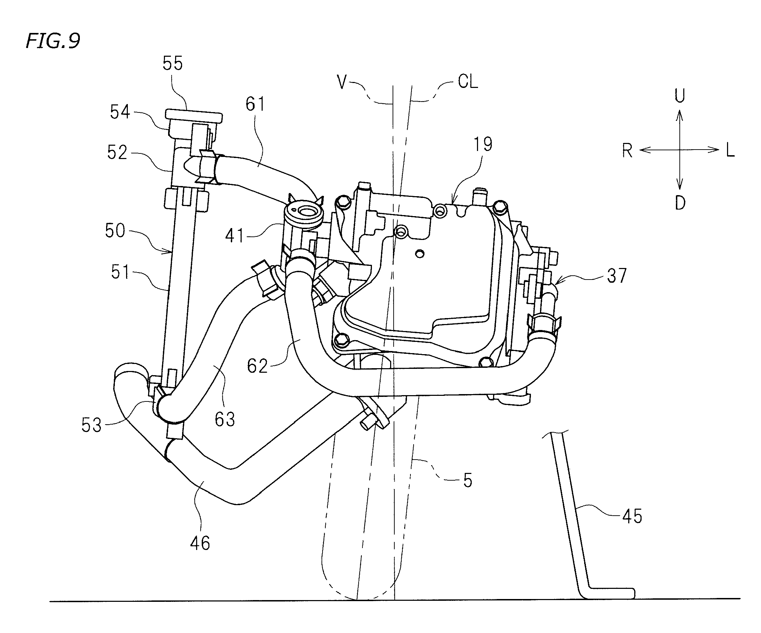

As shown in FIG. 9, the motorcycle 1 includes a side stand 45 that supports the vehicle body frame 2 (see FIG. 1) in a state of inclining with respect to a vertical line V so as to extend further leftward as being further upward. The vehicle body frame 2 may be supported by the side stand 45 directly or indirectly via another member. The side stand 45 is located to the left of the vehicle body frame 2. Where the line passing the center in the width direction of the front wheel 5 and the rear wheel 8 is vehicle center line CL, when the vehicle body frame 2 is supported by the side stand 45, the vehicle center line CL is inclined with respect to the vertical line V so as to extend further leftward as being further upward. The pump 37 is attached to the left portion of the cylinder section 19, and the radiator 50 is located to the right of the crankcase 14 (not shown in FIG. 9; see FIG. 2). Therefore, when the vehicle body frame 2 is supported by the side stand 45, the position of the pump 37 is lower and the position of the top tank 52 of the radiator 50 is higher than when the motorcycle 1 is running straight on a horizontal plane. When the vehicle body frame 2 is supported by the side stand 45, the positions of the water pipes located to the right of the vehicle center line CL (in more detail, the first water pipe 61, a portion of the second water pipe 62 that is located to the right of the vehicle center line CL, and the third water pipe 63) are higher than when the motorcycle 1 is running straight on the horizontal plane.

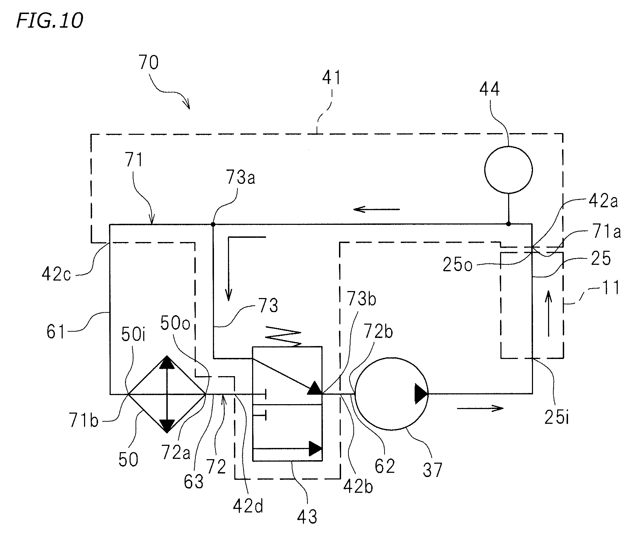

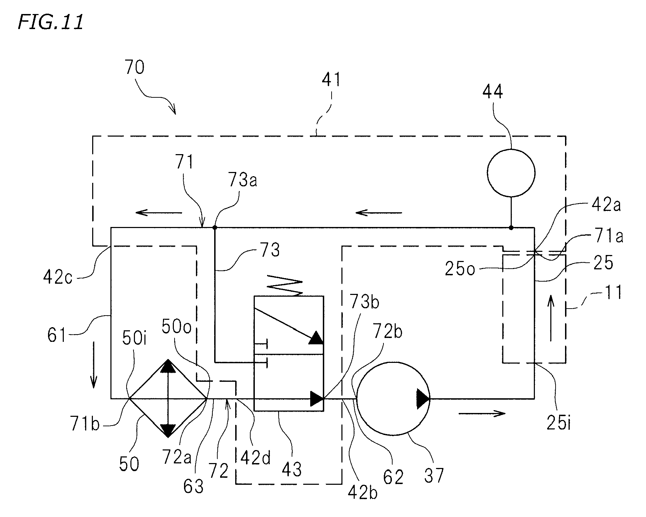

The pump 37, the cooling water path 25, the radiator 50, the thermostat 41, the first water pipe 61, the second water pipe 62, and the third water pipe 63 form a cooling device 70 that cools the engine 11. Now, with reference to FIG. 10 and FIG. 11, a structure of a water circuit of the cooling device 70 will be described. FIG. 10 and FIG. 11 are each a water circuit diagram of the cooling device 70. FIG. 10 shows a flow of the cooling water in the cool period, and FIG. 11 shows a flow of the cooling water in the warm period.

As shown in FIG. 10, the cooling device 70 includes a first main path 71 having a first upstream end 71 a connected to the cooling water outlet 25o and a first downstream end 71 b connected to an inlet 50i (52i) of the radiator 50, and a second main path 72 having a second upstream end 72a connected to an outlet 50o (53o) of the radiator 50 and a second downstream end 72b connected to the pump 37. The cooling device 70 also includes a main bypass path 73 having a third upstream end 73a connected between the first upstream end 71 a and the first downstream end 71 b of the first main path 71 and a third downstream end 73b connected between the second upstream end 72a and the second downstream end 72b of the second main path 72. The first main path 71 includes a path between the first port 42a and the third port 42c of the thermostat 41 and the first water pipe 61. The second main path 72 includes the third water pipe 63, a path between the fourth port 42d and the second port 42b of the thermostat 41, and the second water pipe 62. The main bypass path 73 includes a path between the first port 42a and the second port 42b of the thermostat 41.

In this embodiment, the thermostat 41 includes a temperature sensitive body 44 such as wax or the like. However, there is no specific limitation on the structure of the thermostat 41, and the thermostat 41 may include a temperature sensor instead of the temperature sensitive body 44. The valve 43 acts in accordance with the temperature of the cooling water detected by the temperature sensitive body 44.

In the cool period, the temperature of the cooling water is lower than the reference temperature. Therefore, as shown in FIG. 10, the first port 42a and the second port 42b communicate with each other, and the fourth port 42d is closed. The cooling water is discharged from the pump 37, flows in the cooling water path 25 of the engine 11, and then flows in the main bypass path 73 to return to the pump 37. The cooling water does not flow in the radiator 50. The cooling water warmed in the cooling water path 25 of the engine 11 is supplied to the cooling water path 25 again without being cooled by the radiator 50. Since the engine 11 is not excessively cooled by the cooling water, the temperature of the engine 11 is raised quickly.

When the engine 11 is warmed, the temperature of the cooling water is also raised. In the warm period, the temperature of the cooling water is higher than the reference temperature. Therefore, as shown in FIG. 11, the valve 43 is switched to cause the first port 42a and the third port 42c to communicate with each other and to cause the second port 42b and the fourth port 42d to communicate with each other. The cooling water is discharged from the pump 37, flows in the cooling water path 25 of the engine 11, and then flows into the radiator 50. The cooling water warmed in the cooling water path 25 radiates heat in the radiator 50 to have the temperature thereof lowered. The cooling water having the lowered temperature flows out of the radiator 50, returns to the pump 37, and then is supplied to the cooling water path 25 again. Since the cooling water having such a low temperature is supplied to the cooling water path 25, the engine 11 is cooled.

As described above, in the motorcycle 1 in this embodiment, in the cool period, the temperature of the cooling water is lower than the reference temperature, and therefore the cooling water flows in a bypass path. Namely, the cooling water flows in the pump 37, the cooling water path 25 of the engine 11, and the first port 42a of the thermostat 41, the second port 42b of the thermostat 41, and the second water pipe 62 in this order, and does not flow in the radiator 50. Since the cooling water does not radiate heat in the radiator 50, the cooling water having a low temperature is not supplied to the engine 11. Therefore, the engine 11 can be warmed quickly in the cool period. In this embodiment, no portion of the cooling water flows in the radiator 50 in the cool period. Alternatively, the cooling device 70 may be structured such that in the cool period, a major portion of the cooling water flows in the main bypass path 73 and the rest of the cooling water flows in the radiator 50. In this case, some of the cooling water radiates heat in the radiator 50, and the engine 11 is slightly cooled by the cooling water. Even in this case, the engine 11 is less cooled by the cooling water than in the case where all the cooling water flows in the radiator 50 in the cool period. Therefore, the engine 11 can be warmed quickly.

By contrast, in the warm period, the temperature of the cooling water is higher than the reference temperature. Therefore, the cooling water flows in a main cooling path. Namely, the cooling water flows in the pump 37, the cooling water path 25 of the engine 11, the first port 42a of the thermostat 41, the third port 42c of the thermostat 41, the first water pipe 61, the radiator 50, the third water pipe 63, the fourth port 42d of the thermostat 41, the second port 42b of the thermostat 41, and the second water pipe 62 in this order. Since the cooling water radiates heat in the radiator 50, the cooling water having a low temperature is supplied to the engine 11. Therefore, in the warm period, the engine 11 can be sufficiently cooled in the warm period.

In the motorcycle 1 in this embodiment, the first port 42a of the thermostat 41 is connected to the cooling water outlet 25o of the engine 11. The fourth port 42d of the thermostat 41 is connected to the third water pipe 63 connected to the outlet 53o of the radiator 50. In the motorcycle 1, a bypass path can be formed by use of a portion of the main cooling path. The motorcycle 1 does not need a bypass pipe in which the cooling water flows only in the cool period, which can decrease the number of the water pipes. In the motorcycle 1, as shown in FIG. 3, the outer portion 80a of the temperature sensor 80 and at least a portion of the thermostat 41 overlap the cylinder section 19 of the engine 11 as seen in a vehicle side view. The outer portion 80a of the temperature sensor 80 is not located above or below the cylinder section 19 of the engine 11 as seen in a vehicle side view, and at least a portion of the thermostat 41 is not located above or below the cylinder section 19 of the engine 11 as seen in a vehicle side view, either. In the motorcycle 1, as shown in FIG. 5, at least a portion of the outer portion 80a of the temperature sensor 80 and at least a portion of the thermostat 41 are located at the same position in the left-right direction. The temperature sensor 80 is obliquely inclined with respect to the vertical plane Pc including the axial line Ca of the cylinder section 19. Therefore, the length of the outer portion 80a of the temperature sensor 80 and the length of the thermostat 41 in the left-right direction can be shorter than in the case where the outer portion 80a of the temperature sensor 80 and the thermostat 41 are located side by side in the left-right direction or in the case where the temperature sensor 80 is located perpendicularly with respect to the vertical plane Pc. This suppresses the outer portion 80a of the temperature sensor 80 and the thermostat 41 from significantly protruding rightward from the cylinder section 19. Because of the above-described reasons, the motorcycle 1 in this embodiment can be reduced in size.

A structure in which both of the temperature sensor 80 and the first port 42a of the thermostat 41 are connected to the cooling water outlet 25o of the engine 11 and at least a portion of the outer portion 80a of the temperature sensor 80 and at least a portion of the thermostat 41 are located at the same position in the left-right direction has the following problem: even though the motorcycle 1 is reduced in size, the thermostat 41 may obstruct and make difficult the work of attaching the temperature sensor 80 to the engine 11. By contrast, when the ease of attachment is prioritized, it may be difficult to reduce the size of the motorcycle 1. The present inventors conceived the following: in a structure in which the temperature sensor 80 is located so as to incline obliquely with respect to the vertical plane Pc and at least a portion of the temperature sensor 80 and at least a portion of the thermostat 41 are located at the same position in the left-right direction, the temperature sensor 80 can be inserted obliquely into the cooling water outlet 25o without being obstructed by the thermostat 41; and therefore, the motorcycle 1 can be reduced in size without spoiling the ease of attachment. Therefore, in the motorcycle 1 in this embodiment, the temperature sensor 80 is located to incline obliquely with respect to the vertical plane Pc including the axial line Ca of the cylinder section 19. In the motorcycle 1, as shown in FIG. 8, the temperature sensor 80 can be inserted obliquely into the engine 11, and thus can be attached to the engine without being obstructed by the thermostat 41. In this manner, the motorcycle 1 can be reduced in size without spoiling the ease of attachment.

Hence, the motorcycle 1 in this embodiment can quickly warm the engine 11 in the cool period and sufficiently cool the engine 11 in the warm period, and can be reduced in size.

In the motorcycle 1 in this embodiment, as shown in FIG. 3, the outer portion 80a of the temperature sensor 80 does not overlap any of the first water pipe 61, the second water pipe 62 and the third water pipe 63 as seen in a vehicle side view. Therefore, the first water pipe 61, the second water pipe 62 and the third water pipe 63 are unlikely to obstruct the attachment of the temperature sensor 80. Thus, the motorcycle 1 can be reduced in size without spoiling the ease of attachment.

In the motorcycle 1 in this embodiment, as shown in FIG. 3, at least a portion of the outer portion 80a of the temperature sensor 80 and at least a portion of the thermostat 41 are located at the same position in the direction in which the axial line Ca of the cylinder section 19 extends as seen in a vehicle side view. Therefore, the outer portion 80a of the temperature sensor 80 and the thermostat 41 can be prevented from being long in the direction in which the axial line Ca of the cylinder section 19 extends. Since the temperature sensor 80 and the thermostat 41 can be located in a compact manner, the motorcycle 1 can be reduced in size.

In the motorcycle 1 in this embodiment, as shown in FIG. 3, the outer portion 80a of the temperature sensor 80 is located below the thermostat 41 as seen in a vehicle side view. Therefore, the outer portion 80a of the temperature sensor 80 and the thermostat 41 can be prevented from being long in a front-rear direction. Since the temperature sensor 80 and the thermostat 41 can be located in a compact manner, the motorcycle 1 can be reduced in size. This structure also allows the work of attaching the temperature sensor 80 to be performed below the thermostat 41. Therefore, the work of attaching the temperature sensor 80 can be easily done, and the motorcycle 1 can be reduced in size without spoiling the ease of attachment.

In the motorcycle 1 in this embodiment, as shown in FIG. 3, the outer portion 80a of the temperature sensor 80 is located in an area enclosed by the thermostat 41, the second water pipe 62, the third water pipe 63 and the outer profile 19b of the cylinder section 19 as seen in a vehicle side view. In the warm period, the cooling water which has cooled the engine 11 and thus has a high temperature flows in the first water pipe 61, whereas the cooling water which has radiated heat in the radiator 50 and thus has a low temperature flows in the second water pipe 62 and the third water pipe 63. The temperature of the second water pipe 62 and the third water pipe 63 is sufficiently low for the temperature sensor 80. There is no problem in locating the temperature sensor 80 in the vicinity of the second water pipe 62 or the third water pipe 63. In the motorcycle 1 in which the temperature sensor 80 may be located in the above-described area, the degree of freedom in locating the temperature sensor 80 is increased. Therefore, the temperature sensor 80 can be located in a compact manner, which can reduce the size of the motorcycle 1.

The temperature of a portion of the cylinder section 19 of the engine 11 that is on the side of the gas exhaust pipe connection portion 46a with respect to the axial line Ca of the cylinder section 19 is higher than the temperature of a portion of the cylinder section 19 that is on the side of the air intake pipe connection portion 47a with respect to the axial line Ca of the cylinder section 19. In the motorcycle 1 in this embodiment, as shown in FIG. 3, the temperature sensor 80 is inserted into the cylinder section 19 in a direction from the side of the gas exhaust pipe connection portion 46a to the side of the air intake pipe connection portion 47a as seen in a vehicle side view, while obliquely inclining with respect to the vertical plane Pc including the axial line Ca of the cylinder 19a as shown in FIG. 5. Therefore, the temperature sensor 80 extends rightward and thus is farther from the cylinder section 19 as being closer to the gas exhaust pipe connection portion 46a and being farther from the air intake pipe connection portion 47a. This can suppress the influence of the heat received by the outer portion 80a of the temperature sensor 80 from the cylinder section 19. This allows the detection portion of the temperature sensor 80 to be located closer to the axial line Ca of the cylinder section 19, which can further reduce the size of the motorcycle 1.

In the motorcycle 1 in this embodiment, the engine 11 is swingably supported by the vehicle body frame 2. The engine 11 is a so-called unit swing-type engine. Since the engine 11 swings while the motorcycle 1 is running, the thermostat 41, the temperature sensor 80, the first water pipe 61, the second water pipe 62 and the third water pipe 63 attached to the engine 11 swing along with the swing of the engine 11. For this reason, spaces for the thermostat 41, the temperature sensor 80, the first water pipe 61, the second water pipe 62 and the third water pipe 63 need to be set large such that these components do not contact each other or contact any other component of the motorcycle 1 while swinging, in consideration of the swinging areas thereof. By contrast, as described above, in the motorcycle 1 in this embodiment, the thermostat 41, the temperature sensor 80, the first water pipe 61, the second water pipe 62 and the third water pipe 63 can be located in a compact manner. Therefore, the motorcycle 1 can be reduced in size although including the engine 11 swingably supported by the vehicle body frame 2.

In the case where the temperature sensor 80 is inserted in a downward direction into the cylinder section 19 of the engine 11, the cooling air is likely to be contaminated with air bubbles at the cooling water outlet 25o of the engine 11. When the cooling water is contaminated with air bubbles, the detection precision of the temperature sensor 80 is decreased. In order to avoid this, it is conceivable to provide a mechanism that expels the air bubbles at the cooling water outlet 25o. However, this requires a space for the mechanism that expels the air bubbles, which enlarges the motorcycle 1. By contrast, in the motorcycle 1 in this embodiment, as shown in FIG. 3, the temperature sensor 80 is inserted in an upward direction into the cylinder section 19 as seen in a vehicle side view. Therefore, the cooling water is unlikely to be contaminated with air bubbles at the cooling water outlet 25o. For example, in the case where as shown in FIG. 7, there is a gap 80d between the inner portion 80b of the temperature sensor 80 and the cylinder section 19, air bubbles may undesirably stay in the gap 80d. However, in the case where the temperature sensor 80 is inserted in an upward direction into the cylinder section 19, the gap 80d extends upward. Therefore, the air bubbles in the gap 80d are elevated by buoyancy and flow out of the gap 80d. For this reason, air bubbles are unlikely to stay in the gap 80d. As can be seen, in this embodiment, air is easily prevented from staying in the cooling water outlet 25o, and there is no need of a mechanism that expels air bubbles. Therefore, the motorcycle 1 can be reduced in size.

In the motorcycle 1 in this embodiment, as shown in FIG. 3, as seen in a vehicle side view, the outer portion 80a of the temperature sensor 80 overlaps the axial line Ca of the cylinder section 19. The temperature sensor 80 is attached to a central portion of the cylinder section 19. The work of attaching the temperature sensor 80 is easier than in the case where the temperature sensor 80 is attached to an end of the cylinder section 19. Therefore, the motorcycle 1 can be reduced in size without spoiling the ease of attaching the temperature sensor 80.

In the motorcycle 1 in this embodiment, the temperature sensor 80 and the thermostat 41 are located to the right of the axial line Ca of the cylinder section 19, whereas the pump 37 is located to the left of the axial line Ca of the cylinder section 19. Therefore, the pump 37 does not obstruct the work of attaching the temperature sensor 80. This allows the temperature sensor 80 to be attached easily. Alternatively, the temperature sensor 80 and the thermostat 41 may be located to the left of the axial line Ca of the cylinder section 19, whereas the pump 37 may be located to the right of the axial line Ca of the cylinder section 19. In this case also, substantially the same effect is provided. The motorcycle 1 can be reduced in size without spoiling the ease of attaching the temperature sensor 80.

In the motorcycle 1 in this embodiment, the radiator 50 is located to the right of the crankcase 14, and the thermostat 41 is located to the right of the axial line Ca of the cylinder section 19. The radiator 50 is located either on the right side or the left side with respect to axial line Ca of the cylinder section 19 where the thermostat 41 is located. This can shorten the distance between the thermostat 41 and the radiator 50 and also shorten lengths of the first water pipe 61 and the third water pipe 63, and thus can reduce the size of the motorcycle 1.

So far, one embodiment of the present invention has been described. The above-described embodiment is merely an example, and the present invention can be carried out in various other forms. Now, other embodiments of the present invention will be briefly described.

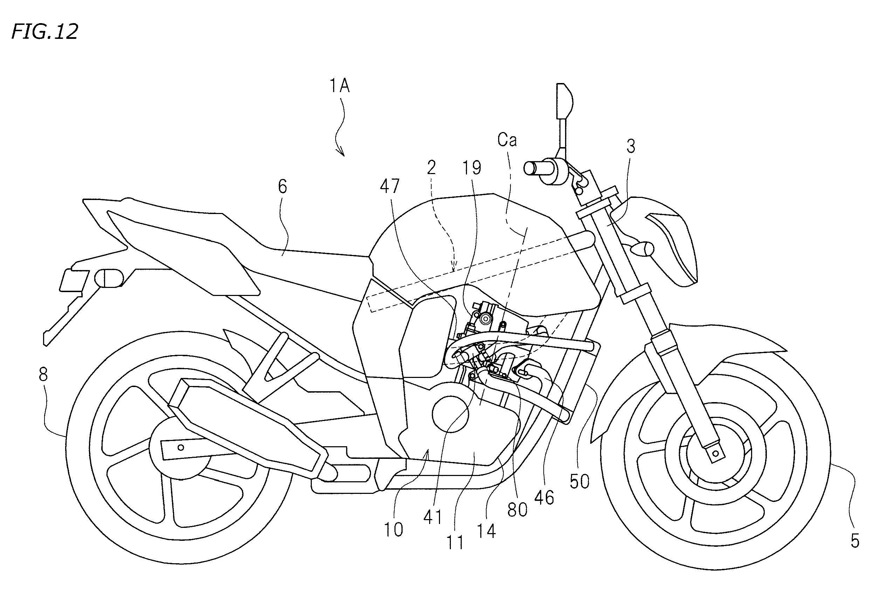

The saddle-type vehicle in the above-described embodiment is the motorcycle 1 including the engine 1 swingably supported by the vehicle body frame 2. Alternatively, the saddle-type vehicle according to the present invention may be, as shown in FIG. 12, a motorcycle 1A in which the engine 11 is supported by the vehicle body frame 2 so as not to be swingable. The motorcycle 1A is a so-called on-road motorcycle.

In the motorcycle 1 in the above-described embodiment, the radiator 50 is located to the right of the engine 11. In the motorcycle 1A, the radiator 50 is located forward with respect to the engine 11. The engine 11 includes the crankcase 14, and the cylinder section 19 extending upward from the crankcase 14. Herein, the expression "extending upward" refers both to extending upward vertically and extending upward in a direction inclining with respect to a vertical line. In this example, the cylinder section 19 extends obliquely in a forward and upward direction from the crankcase 14. In the motorcycle 1 in the above-described embodiment, the angle of the axial line Ca of the cylinder section 19 with respect to a horizontal line is smaller than 45 degrees. In the motorcycle 1A in this embodiment, the angle of the axial line Ca of the cylinder section 19 with respect to the horizontal line is equal to or larger than 45 degrees.

The temperature sensor 80 is located forward with respect to the thermostat 41 as seen in a vehicle side view. The air intake pipe 47 is connected to a rear portion of the cylinder section 19, and the gas exhaust pipe 46 is connected to a front portion of the cylinder section 19. The air intake pipe connection portion that is connected to the air intake pipe 47 is formed in the rear portion of the cylinder section 19, and the gas exhaust pipe connection portion that is connected to the gas exhaust pipe 46 is formed in the front portion of the cylinder section 19. The temperature sensor 80 is inserted in a rearward direction into the cylinder section 19. Except for these, the structure of the motorcycle 1A is substantially the same as that of the motorcycle 1 and will not be described.

In the above-described embodiment, the thermostat 41 is structured to close the fourth port 42d in the cool period so that the cooling water does not flow to the radiator 50. In other words, the flow of the cooling water from the radiator 50 is inhibited, so that the heat radiation from the cooling water in the radiator 50 is prevented. However, there is no specific limitation on the method for preventing heat radiation from the cooling water in the radiator 50. The thermostat 41 may be structured to cause the first port 42a and the second port 42b to communicate with each other and to close the third port 42c in the cool period. Since closing the third port 42c can also prevent the flow of the cooling water from the radiator 50, the heat radiation from the cooling water in the radiator 50 can be inhibited.

In the above-described embodiment, as seen in a vehicle side view, the temperature sensor 80 does not overlap any of the first water pipe 61, the second water pipe 62 and the third water pipe 63. Alternatively, the temperature sensor 80 may overlap at least one of the first water pipe 61, the second water pipe 62 and the third water pipe 63 while not overlapping the rest of the first water pipe 61, the second water pipe 62 and the third water pipe 63 as seen in a vehicle side view. The temperature sensor 80 may or may not overlap the first water pipe 61 as seen in a vehicle side view. The temperature sensor 80 may or may not overlap the second water pipe 62 as seen in a vehicle side view. The temperature sensor 80 may or may not overlap the third water pipe 63 as seen in a vehicle side view.

In the above-described embodiment, the cooling water inlet 25i is located to the left of the cylinder section 19, whereas the cooling water outlet 25o is located to the right of the cylinder section 19. Alternatively, the cooling water inlet 25i may be located to the right of the cylinder section 19, whereas the cooling water outlet 25o may be located to the left of the cylinder section 19. In this case, the pump 37 may be located to the right of the cylinder section 19, and the thermostat 41 and the temperature sensor 80 may be located to the left of the cylinder section 19. Still alternatively, both of the cooling water inlet 25i and the cooling water outlet 25o may be located to the right or to the left of the cylinder section 19.

In the above-described embodiment, the radiator 50 is located to the right of the engine 11, whereas the pump 37 is located to the left of the engine 11. Alternatively, the radiator 50 may be located to the left of the engine 11, whereas the pump 37 may be located to the right of the engine 11. Still alternatively, both of the radiator 50 and the pump 37 may be located to the right or to the left of the cylinder section 19.

### Reference Signs List

- 1: Motorcycle (saddle-type vehicle)
- 11: Internal combustion engine
- 14: Crankcase
- 19: Cylinder section
- 37: Pump
- 41: Thermostat
- 61: First water pipe
- 62: Second water pipe
- 63: Third water pipe
- 80: Temperature sensor

## Claims

1. A saddle-type vehicle (1), comprising:
an internal combustion engine (11) including a crankcase (14), a cylinder section (19) extending forward or upward from the crankcase (14) and comprising a combustion chamber (24) formed therein, a cooling water path (25) which is formed in the cylinder section (19) and in which cooling water flows, a cooling water inlet (25i) through which the cooling water flows into the cooling water path (25), and a cooling water outlet (25o) through which the cooling water flows out of the cooling water path (25);
a radiator (50) comprising an inlet (52i) through which the cooling water flows thereinto and an outlet (53o) through which the cooling water flows out thereof;
a pump (37) that is attached to the internal combustion engine (11) and supplies the cooling water toward the cooling water inlet (25i);
a temperature sensor (80) that is attached to the internal combustion engine (11) and detects a temperature of the cooling water;
a first water pipe (61) comprising a downstream end connected to the inlet (52i) of the radiator (50);
a second water pipe (62) comprising a downstream end connected to the pump (37);
a third water pipe (63) comprising an upstream end connected to the outlet (53o) of the radiator (50); and
a thermostat (41) connected to the cooling water outlet (25o) of the internal combustion engine (11), to an upstream end of the second water pipe (62), to an upstream end of the first water pipe (61), and to a downstream end of the third water pipe (63), wherein:
the temperature sensor (80) includes an inner portion (80b) located inside the internal combustion engine (11) and an outer portion (80a) located outside the internal combustion engine (11);
the outer portion (80a) of the temperature sensor (80) and at least a portion of the thermostat (41) overlap the cylinder section (19) of the internal combustion engine (11) as seen in a vehicle side view;
a left end of the outer portion (80a) of the temperature sensor (80) is located to the left of a right end of the thermostat (41), and a right end of the outer portion (80a) of the temperature sensor (80) is located to the right of a left end of the thermostat (41),
wherein the cooling water inlet (25i) is formed in the cylinder section (19) and the cooling water outlet (25o) is formed in a right portion or a left portion of the cylinder section (19); the pump (37) is attached to the cylinder section (19) of the internal combustion engine (11); **characterized in that**
the thermostat (41) comprises a thermostat case (42) having a first port (42a) connected to the cooling water outlet (25o) of the internal combustion engine (11), a second port (42b) connected to the upstream end of the second water pipe (62), a third port (42c) connected to the upstream end of the first water pipe (61), and a fourth port (42d) connected to the downstream end of the third water pipe (63), the thermostat (41) causing the first port (42a) and the second port (42b) to communicate with each other when the temperature of the cooling water is lower than a reference temperature, and causing the first port (42a) and the third port (42c) to communicate with each other and causing the second port (42b) and the fourth port (42d) to communicated with each other when the temperature of the cooling water is higher than the reference temperature;
the temperature sensor (80) is attached to the cooling water outlet (25o) of the internal combustion engine (11);
the outer portion (80a) of the temperature sensor (80) and at least a portion of the thermostat (41) overlap the cylinder section (19) of the internal combustion engine (11) as seen in a vehicle side view;
a center line (80c) of the outer portion (80a) of the temperature sensor (80) extends from the cooling water outlet (25o) of the internal combustion engine (11) in a direction obliquely inclining with respect to a vehicle vertical plane (Pc) including an axial line (Ca) of the cylinder section (19) of the internal combustion engine (11) when the vehicle is positioned such that a vehicle center line (CL) is vertical.

2. A saddle-type vehicle (1) according to claim 1, **characterized in that,** as seen in a vehicle side view, the outer portion (80a) of the temperature sensor (80) does not overlap any of the first water pipe (61), the second water pipe (62) and the third water pipe (63).

3. A saddle-type vehicle (1) according to claim 1 or 2, **characterized in that,** as seen in a vehicle side view, the thermostat (41) has a first end (41 a), which is one of two ends thereof in a direction in which the axial line of the cylinder section (19) extends, and a second end (41 b), which is the other end thereof in the direction in which the axial line of the cylinder section (19) extends; and
as seen in a vehicle side view, the outer portion (80a) of the temperature sensor (80) is located between the first end (41 a) and the second end (41 b) of the thermostat (41) in the direction in which the axial line of the cylinder section (19) extends.

4. A saddle-type vehicle (1) according to any one of claims 1 to 3, **characterized in that,** as seen in a vehicle side view, the outer portion (80a) of the temperature sensor (80) is located in an area enclosed by the thermostat (41), the second water pipe (62), the third water pipe (63) and an outer profile of the cylinder section (19).

5. A saddle-type vehicle (1) according to any one of claims 1 to 4, **characterized in that** the cylinder section (19) of the internal combustion engine (11) includes an air intake pipe connection portion (47a) connected to an air intake pipe that supplies air to the internal combustion engine (11) and a gas exhaust pipe connection portion (46a) connected to a gas exhaust pipe (46) that discharges exhaust gas from the internal combustion engine (11);
as seen in a vehicle side view, the axial line of the cylinder section (19) is located between the air intake pipe connection portion (47a) and the gas exhaust pipe connection portion (46a); and
as seen in a vehicle side view, the temperature sensor (80) extends into the cooling water outlet (25o) of the internal combustion engine (11) from a side on which the gas exhaust pipe connection portion (46a) is arranged with respect to the axial line of the cylinder section (19) toward a side on which the air intake pipe connection portion (47a) is arranged with respect to the axial line of the cylinder section (19).

6. A saddle-type vehicle (1) according to any one of claims 1 to 5, **characterized by** a vehicle body frame (2) including a left frame portion (2L) extending in a front-rear direction, and a right frame portion (2R) located to the right of the left frame portion (2L) and extending in the front-rear direction; wherein:
the internal combustion engine (11) is swingably supported by the vehicle body frame (2); and
as seen in a vehicle plan view, the cylinder section (19) of the internal combustion engine (11) is located between the left frame portion (2L) and the right frame portion (2R).

7. A saddle-type vehicle (1) according to claim 6, **characterized in that,** as seen in a vehicle side view, the temperature sensor (80) extends in an upward direction into the cooling water outlet (25o) of the internal combustion engine (11).

8. A saddle-type vehicle (1) according to claim 7, **characterized in that** as seen in a vehicle side view, the outer portion (80a) of the temperature sensor (80) is located below the thermostat (41).

9. A saddle-type vehicle (1) according to claim 8, **characterized in that,** as seen in a vehicle side view, the outer portion (80a) of the temperature sensor (80) overlaps the axial line of the cylinder section (19).

10. A saddle-type vehicle (1) according to any one of claims 1 to 9, **characterized in that** the temperature sensor (80) and the thermostat (41) are located to the right or to the left of the axial line of the cylinder section (19); and
the pump (37) is located to the right or to the left of the axial line (Ca) of the cylinder section (19) so as to be on the opposite side to the temperature sensor and the thermostat (41) with respect to the axial line of the cylinder section (19).

11. A saddle-type vehicle (1) according to any one of claims 1 to 10, **characterized in that** the radiator (50) is located at a position that is to the side of the crankcase (14) and is to the right or to the left of the axial line (Ca) of the cylinder section (19) so as to be on the same side with the thermostat (41) with respect to the axial line (Ca) of the cylinder section (19).

## Patentansprüche

1. Ein Sattel-Typ-Fahrzeug (1), das umfasst:
eine Brenn-Kraft-Maschine mit innerer Verbrennung (11), die ein Kurbelgehäuse (14), einen Zylinderabschnitt (19), der sich nach vorne oder nach oben von dem Kurbelgehäuse (14) erstreckt und eine Brennkammer (24) darin ausgebildet, umfasst, einen Kühlwasser-Pfad (25), der in dem Zylinderabschnitt (19) ausgebildet ist und in den Kühlwasser strömt, einen Kühlwasser-Einlass (25i), durch den das Kühlwasser in den Kühlwasser-Pfad (25) strömt, und einen Kühlwasser-Auslass (25o), durch den das Kühlwasser aus dem Kühlwasser-Pfad (25) strömt;
einen Radiator (50), der einen Einlass (52i), durch den das Kühlwasser hineinströmt, und einen Auslass (53o), durch den das Kühlwasser herausströmt, umfasst;
eine Pumpe (37), die an der Brenn-Kraft-Maschine mit innerer Verbrennung (11) angebracht ist und das Kühlwasser zu dem Kühlwasser-Einlass (25i) zuführt;
einen Temperatursensor (80), der an der Brenn-Kraft-Maschine mit innerer Verbrennung (11) angebracht ist und eine Temperatur des Kühlwassers erfasst;
eine erste Wasserleitung (61), die ein Strom-Ab-Ende umfasst, das mit dem Einlass (25i) des Radiators verbunden ist;
eine zweite Wasserleitung (62), die ein Strom-Ab-Ende umfasst, das mit der Pumpe (37) verbunden ist;
eine dritte Wasserleitung (63), die ein Strom-Auf-Ende umfasst, das mit dem Auslass (53o) des Radiators (50) verbunden ist und
ein Thermostat (41), das mit dem Kühlwasser-Auslass (25o) der Brenn-Kraft-Maschine mit innerer Verbrennung (11), mit einem Strom-Auf-Ende der zweiten Wasserleitung (62), mit einem Strom-Auf-Ende der ersten Wasserleitung (61), und
mit einem Strom-Auf-Ende der dritten Wasserleitung (63) verbunden ist, wobei:
der Temperatursensor (80) einen inneren Abschnitt (80b), der innerhalb der Brenn-Kraft-Maschine mit inneren Verbrennung (11) angeordnet ist, und einen äußeren Abschnitt (80a), der außerhalb der Brenn-Kraft-Maschine mit innerer Verbrennung (11) angeordnet ist, beinhaltet;
der äußere Abschnitt (80a) des Temperatursensors (80) und zumindest ein Abschnitt des Thermostats (41) überlappen mit dem Zylinderabschnitt (19) der Brenn-Kraft-Maschine mit innerer Verbrennung (11), wenn in einer Fahrzeug-Seiten-Ansicht betrachtet;
ein linkes Ende des äußeren Abschnitts (80a) des Temperatursensors (80) ist links von einem rechten Ende des Thermostats (41) angeordnet, und ein rechtes Ende des äußeren Abschnitts (80a) des Temperatursensors (80) ist rechts von einem linken Ende des Thermostats (41) angeordnet, wobei der Kühlwasser-Einlass (25i) in dem Zylinderabschnitt (19) ausgebildet ist und der Kühlwasser-Auslass (25o) in einem rechten Abschnitt oder einem linken Abschnitt des Zylinderabschnitts (19) ausgebildet ist; die Pumpe (37) ist an dem Zylinderabschnitt (19) der Brenn-Kraft-Maschine mit innerer Verbrennung (11) angebracht, **dadurch gekennzeichnet, dass** das Thermostat (41) ein Thermostat-Gehäuse (42) umfasst, das einen ersten Anschluss (42a) hat, der mit dem Kühlwasser-Auslass (25) oder Brenn-Kraft-Maschine mit innerer Verbrennung (11) verbunden ist, einen zweiten Anschluss (42b) hat, der mit dem Strom-Auf-Ende der zweiten Wasserleitung (62) verbunden ist, einen dritten Anschluss (42c) hat, der mit dem Strom-Auf-Ende der ersten Wasserleitung (61) verbunden ist, und einen vierten Anschluss (42d) hat, der mit dem Strom-Ab-Ende der dritten Wasserleitung (63) verbunden ist, das Thermostat (41) bewirkt, dass der erste Anschluss (42a) und der zweite Anschluss (42b) miteinander kommunizieren, wenn die Temperatur des Kühlwassers niedriger ist als eine Referenztemperatur, und bewirkt, dass der erste Anschluss (42a) und der dritte Anschluss (42c) miteinander kommunizieren und bewirkt, dass der zweite Anschluss (42b) und der vierte Anschluss (42d) miteinander kommunizieren, wenn die Temperatur des Kühlwassers höher als die Referenztemperatur ist;
der Temperatursensor (80) ist an dem Kühlwasser-Auslasss (25o) der Brenn-Kraft-Maschine mit innerer Verbrennung (11) angebracht;
der äußere Abschnitt (80a) des Temperatursensors (80) und zumindest ein Abschnitt des Thermostats (41) überlappen den Zylinderabschnitt (19) der Brenn-Kraft-Maschine mit innerer Verbrennung (11), wenn in einer Fahrzeug-Seiten-Ansicht betrachtet;
eine Mittellinie (80c) des äußeren Abschnitts (80a) des Temperatursensors (80) erstreckt sich von dem Kühlwasser-Auslass (25o) der Brenn-Kraft-Maschine mit innerer Verbrennung (11) in eine Richtung schräg geneigt mit Bezug auf eine Fahrzeug-Vertikal-Ebene (Pc), welche eine Axial-Linie (Ca) des Zylinderabschnitts (19) der Brenn-Kraft-Maschine mit innerer Verbrennung beinhaltet, wenn das Fahrzeug positioniert ist, so dass eine Fahrzeug-Mittel-Linie (CL) vertikal ist.

2. Ein Sattel-Typ-Fahrzeug (1) gemäß Anspruch 1, **dadurch gekennzeichnet, dass,** wenn in einer Fahrzeug-Seiten-Ansicht betrachtet, überlappt der äußere Abschnitt (80a) des Temperatursensors (80) nicht mit irgendeiner von der ersten Wasserleitung (61), der zweiten Wasserleitung (62) und der dritten Wasserleitung (63).

3. Ein Sattel-Typ-Fahrzeug (1) gemäß Anspruch 1 oder 2, **dadurch gekennzeichnet, dass,** wenn in einer Fahrzeug-Seiten-Ansicht betrachtet, hat das Thermostat (41) ein erstes Ende (41 a), welches eines von zwei Enden desselben ist in einer Richtung, in welcher sich die Axial-Linie des Zylinderabschnitts (19) erstreckt, und ein zweites Ende (41 b), welches das andere Ende desselben ist in der Richtung, in welcher sich die Axial-Linie des Zylinderabschnitts (19) erstreckt; und
wenn in einer Fahrzeug-Seiten-Ansicht betrachtet, ist der äußere Abschnitt (80a) des Temperatursensors (80) zwischen dem ersten Ende (41 a) und dem zweiten Ende (41 b) des Thermostats (41) angeordnet in der Rechnung, in welcher sich die Axial-Linie des Zylinderabschnitts (19) erstreckt.

4. Ein Sattel-Typ-Fahrzeug (1) gemäß irgendeinem der Ansprüche 1 bis 3, **dadurch gekennzeichnet, dass,** wenn in einer Fahrzeug-Seiten-Ansicht betrachtet, ist der äußere Abschnitt (80a) des Temperatursensors (80) in einem Bereich angeordnet, der durch das Thermostat (41), die zweite Wasserleitung (62), die dritte Wasserleitung (63) und ein äußeres Profil des Zylinderabschnitts (19) eingeschlossen ist.

5. Ein Sattel-Typ-Fahrzeug (1) gemäß irgendeinem der Ansprüche 1 bis 4, **dadurch gekennzeichnet, dass** der Zylinderabschnitt (19) der Brenn-Kraft-Maschine mit innerer Verbrennung (11) einen Lufteinlassleitungs-Verbindungsabschnitt (47a), der mit einer Lufteinlassleitung verbunden ist, die Luft zu der Brenn-Kraft-Maschine mit innerer Verbrennung (11) zuführt, und einen Abgasleitungs-Verbindungsabschnitt (46a) beinhaltet, der mit einer Abgasleitung (46) verbunden ist, die Abgas von der Brenn-Kraft-Maschine mit innerer Verbrennung (11) abgibt;
wenn in einer Fahrzeug-Seiten-Ansicht betrachtet, ist die Axial-Linie des Zylinderabschnitts (19) zwischen dem Lufteinlassleitungs-Verbindungsabschnitt (47a) und dem Abgasleitungs-Verbindungsabschnitt (46a) angeordnet; und
wenn in einer Fahrzeug-Seiten-Ansicht betrachtet, erstreckt sich der Temperatursensor (80) in den Kühlwasser-Auslass (25o) der Brenn-Kraft-Maschine mit innerer Verbrennung (11) von einer Seite, an welcher der Abgasleitungs-Verbindungsabschnitt (46a) angeordnet ist, mit Bezug auf die Axial-Linie des Zylinderabschnitts (19), zu einer Seite, an welcher der Lufteinlassleitungs-Verbindungsabschnitt (47a) angeordnet ist, mit Bezug auf die Axial-Linie des Zylinderabschnitts (19).

6. Ein Sattel-Typ-Fahrzeug (1) gemäß irgendeinem der Ansprüche 1 bis 5, **gekennzeichnet durch** einen Fahrzeug-Körper-Rahmen (2), der einen linken Rahmenabschnitt (2L), der sich in eine Vorder-Rück-Richtung erstreckt, und einen rechten Rahmenabschnitt (2R), der rechts von dem linken Rahmenabschnitt (2L) angeordnet ist und sich in die Vorder-Rück-Richtung erstreckt, beinhaltet; wobei:
die Brenn-Kraft-Maschine mit innerer Verbrennung (11) schwingend **durch** den Fahrzeug-Körper-Rahmen (2) gelagert ist; und
wenn in einer Draufsicht betrachtet, ist der Zylinderabschnitt (19) der Brenn-Kraft-Maschine mit innerer Verbrennung (11) zwischen dem linken Rahmenabschnitt (2L) und dem rechten Rahmenabschnitt (2R) angeordnet.

7. Ein Sattel-Typ-Fahrzeug (1) gemäß Anspruch 6, **dadurch gekennzeichnet, dass,** wenn in einer Fahrzeug-Seiten-Ansicht betrachtet, erstreckt sich der Temperatursensor (80) in eine Richtung nach oben in den Kühlwasser-Auslass (25o) der Brenn-Kraft-Maschine mit innerer Verbrennung (11).

8. Ein Sattel-Typ-Fahrzeug (1) gemäß Anspruch 7, **dadurch gekennzeichnet, dass,** wenn in einer Fahrzeug-Seiten-Ansicht betrachtet, ist der äußere Abschnitt (80a) des Temperatursensors (80) unterhalb des Thermostats (41) angeordnet.

9. Ein Sattel-Typ-Fahrzeug (1) gemäß Anspruch 8, **dadurch gekennzeichnet, dass,** wenn in einer Fahrzeug-Seiten-Ansicht betrachtet, überlappt der äußere Abschnitt (80a) des Temperatursensors (80) die Axial-Linie des Zylinderabschnitts (19).

10. Ein Sattel-Typ-Fahrzeug (1) gemäß irgendeinem der Ansprüche 1 bis 9, **dadurch gekennzeichnet, dass** der Temperatursensor (80) und der Thermostat (41) rechts oder links von der Axial-Linie des Zylinderabschnitts (19) angeordnet sind; und die Pumpe (37) ist rechts oder links von der Axial-Linie (Ca) des Zylinderabschnitts (19) angeordnet, so dass diese an der gegenüberliegenden Seite zu dem Temperatursensor und dem Thermostat (41) mit Bezug auf die Axial-Linie des Zylinderabschnitts (19) sind.

11. Ein Sattel-Typ-Fahrzeug (1) gemäß irgendeinem der Ansprüche 1 bis 10, **dadurch gekennzeichnet, dass** der Radiator (50) an einer Position angeordnet ist, die an der Seite des Kurbelgehäuses (14) ist, und die rechts oder links von der Axial-Linie (Ca) des Zylinderabschnitts (19) ist, so dass dieser an der gleichen Seite mit dem Thermostat (41) mit Bezug auf die Axial-Linie (Ca) des Zylinderabschnitts (19) ist.

## Revendications

1. Véhicule de type à selle (1), comprenant :
un moteur à combustion interne (11) incluant un carter de vilebrequin (14), une partie cylindre (19) s'étendant vers l'avant ou le haut à partir du carter de vilebrequin (14) et comprenant une chambre de combustion (24) formée dans celle-ci, un circuit d'eau de refroidissement (25) formé dans la partie cylindre (19) et dans lequel circule de l'eau de refroidissement, une admission d'eau de refroidissement (25i) par laquelle l'eau de refroidissement pénètre dans le circuit d'eau de refroidissement (25) et une sortie d'eau de refroidissement (25o) par laquelle l'eau de refroidissement s'échappe du circuit d'eau de refroidissement (25) ;
un radiateur (50) comprenant une admission (52i) par laquelle pénètre l'eau de refroidissement et une sortie (53o) par laquelle s'échappe l'eau de refroidissement ;
une pompe (37) fixée au moteur à combustion interne (11) et acheminant l'eau de refroidissement vers l'admission d'eau de refroidissement (25i) ;
un capteur de température (80) fixé au moteur à combustion interne (11) et détectant une température de l'eau de refroidissement ;
une première conduite d'eau (61) comprenant une extrémité aval connectée à l'admission (52i) du radiateur (50) ;
une seconde conduite d'eau (62) comprenant une extrémité aval connectée à la pompe (37) ;
une troisième conduite d'eau (63) comprenant une extrémité amont connectée à la sortie (53o) du radiateur (50) ; et
un thermostat (41) connecté à la sortie d'eau de refroidissement (25o) du moteur à combustion interne (11), à une extrémité amont de la seconde conduite d'eau (62), à une extrémité amont de la première conduite d'eau (61) et à une extrémité aval de la troisième conduite d'eau (63),
où :
le capteur de température (80) inclut une partie intérieure (80b) située à l'intérieur du moteur à combustion interne (11) et une partie extérieure (80a) située à l'extérieur du moteur à combustion interne (11) ;
la partie extérieure (80a) du capteur de température (80) et au moins une partie du thermostat (41) se superposent à la partie cylindre (19) du moteur à combustion interne (11) dans une vue latérale du véhicule ;
une extrémité gauche de la partie extérieure (80a) du capteur de température (80) est située à gauche d'une extrémité droite du thermostat (41) et une extrémité droite de la partie extérieure (80a) du capteur de température (80) est située à droite d'une extrémité gauche du thermostat (41),
où l'admission d'eau de refroidissement (25i) est formée dans la partie cylindre (19) et la sortie d'eau de refroidissement (25o) est formée dans une partie droite ou une partie gauche de la partie cylindre (19) ;
la pompe (37) est fixée à la partie cylindre (19) du moteur à combustion interne (11) ; **caractérisé en ce que**
le thermostat (41) comprend un boîtier de thermostat (42) comportant une première ouverture (42a) connectée à la sortie d'eau de refroidissement (25o) du moteur à combustion interne (11), une seconde ouverture (42b) connectée à l'extrémité amont de la seconde conduite d'eau (62), une troisième ouverture (42c) connectée à l'extrémité amont de la première conduite d'eau (61) et une quatrième ouverture (42d) connectée à l'extrémité aval de la troisième conduite d'eau (63), le thermostat (41) mettant en communication la première ouverture (42a) et la seconde ouverture (42b) lorsque la température de l'eau de refroidissement est inférieure à une température de référence et mettant en communication la première ouverture (42a) avec la troisième ouverture (42c) et la seconde ouverture (42b) avec la quatrième ouverture (42d) lorsque la température de l'eau de refroidissement est supérieure à la température de référence ;
le capteur de température (80) est fixé à la sortie d'eau de refroidissement (25o) du moteur à combustion interne (11) ;
la partie extérieure (80a) du capteur de température (80) et au moins une partie du thermostat (41) se superposent avec la partie cylindre (19) du moteur à combustion interne (11) dans une vue latérale du véhicule ;
une ligne centrale (80c) de la partie extérieure (80a) du capteur de température (80) s'étend de la sortie d'eau de refroidissement (25o) du moteur à combustion interne (11) dans une direction oblique inclinée par rapport à un plan vertical du véhicule (Pc) incluant une ligne axiale (Ca) de la partie cylindre (19) du moteur à combustion interne (11), quand le véhicule est positionné de manière à ce que la ligne centrale du véhicule (CL) soit verticale.

2. Véhicule de type à selle (1) selon la revendication 1, **caractérisé en ce que** dans une vue latérale du véhicule, la partie extérieure (80a) du capteur de température (80) ne se superpose à aucun de la première conduite d'eau (61), de la seconde conduite d'eau (62) et de la troisième conduite d'eau (63).

3. Véhicule de type à selle (1) selon la revendication 1 ou 2, **caractérisé en ce que** dans une vue latérale du véhicule, le thermostat (41) comporte une première extrémité (41a) qui correspond à l'une de ses deux extrémités dans une direction dans laquelle s'étend la ligne axiale de la partie cylindre (19) et une seconde extrémité (41b) qui correspond à l'autre de ses extrémités dans la direction dans laquelle s'étend la ligne axiale de la partie cylindre (19) ; et
dans une vue latérale du véhicule, la partie extérieure (80a) du capteur de température (80) se situe entre la première extrémité (41a) et la seconde extrémité (41b) du thermostat (41) dans la direction dans laquelle s'étend la ligne axiale de la partie cylindre (19).

4. Véhicule de type à selle (1) selon l'une quelconque des revendications 1 à 3, **caractérisé en ce que** dans une vue latérale du véhicule, la partie extérieure (80a) du capteur de température (80) se situe dans une zone délimitée par le thermostat (41), la seconde conduite d'eau (62), la troisième conduite d'eau (63) et un profil extérieur de la partie cylindre (19).

5. Véhicule de type à selle (1) selon l'une quelconque des revendications 1 à 4, **caractérisé en ce que** la partie cylindre (19) du moteur à combustion interne (11) inclut une partie de connexion d'une conduite d'admission d'air (47a) connectée à une conduite d'admission d'air qui approvisionne le moteur à combustion interne (11) en air et une partie de connexion d'une conduite d'échappement des gaz (46a) connectée à une conduite d'échappement des gaz (46) qui évacue les gaz d'échappement en provenance du moteur à combustion interne (11) ;
dans une vue latérale du véhicule, la ligne axiale de la partie cylindre (19) se situe entre la partie de connexion de la conduite d'admission d'air (47a) et la partie de connexion de la conduite d'échappement des gaz (64a) ; et
dans une vue latérale du véhicule, le capteur de température (80) s'étend dans la sortie d'eau de refroidissement (25o) du moteur à combustion interne (11) depuis un côté, par rapport à la ligne axiale de la partie cylindre (19), sur lequel est agencé la partie de connexion de la conduite d'échappement des gaz (46a) vers un côté, par rapport à la ligne axiale de la partie cylindre (19), sur lequel est agencé la partie de connexion de la conduite d'admission d'air (47a).

6. Véhicule de type à selle (1) selon l'une quelconque des revendications 1 à 5, **caractérisé par** un châssis de véhicule (2) comprenant une partie de châssis gauche (2L) s'étendant dans une direction avant-arrière et une partie de châssis droite (2R) située à droite de la partie de châssis gauche (2L) et s'étendant dans la direction avant-arrière ; où
le moteur à combustion interne (11) est supporté de manière oscillante par le châssis de véhicule (2) ; et
dans une vue latérale du véhicule, la partie cylindre (19) du moteur à combustion interne (11) se situe entre la partie de châssis gauche (2L) et la partie de châssis droite (2R).

7. Véhicule de type à selle (1) selon la revendication 6, **caractérisé en ce que** dans une vue latérale du véhicule, le capteur de température (80) s'étend vers le haut dans la sortie d'eau de refroidissement (25o) du moteur à combustion interne (11).

8. Véhicule de type à selle (1) selon la revendication 7, **caractérisé en ce que** dans une vue latérale du véhicule, la partie extérieure (80a) du capteur de température (80) se situe sous le thermostat (41).

9. Véhicule de type à selle (1) selon la revendication 8, **caractérisé en ce que** dans une vue latérale du véhicule, la partie extérieure (80a) du capteur de température (80) se superpose à la ligne axiale de la partie cylindre (19).

10. Véhicule de type à selle (1) selon l'une quelconque des revendications 1 à 9, **caractérisé en ce que** le capteur de température (80) et le thermostat (41) se situent à droite ou à gauche de la ligne axiale de la partie cylindre (19) ; et
la pompe (37) se situe à droite ou à gauche de la ligne axiale (Ca) de la partie cylindre (19) de manière à se trouver du côté opposé au capteur de température et du thermostat (41) par rapport à la ligne axiale de la partie cylindre (19).

11. Véhicule de type à selle (1) selon l'une quelconque des revendications 1 à 10, **caractérisé en ce que** le radiateur (50) se situe en une position latérale par rapport au carter de vilebrequin (14) et à droite ou à gauche de la ligne axiale (Ca) de la partie cylindre (19) de manière à se trouver du même côté que le thermostat (41) par rapport à la ligne axiale (Ca) de la partie cylindre (19).
